# EUROPEAN PATENT APPLICATION

(11) **EP 4 845 213 A1**
(43) Date of publication of application: **25.11.2026**
(21) Application number: 24921525.2
(22) Date of filing: 16.10.2024
(51) Int. Cl.: H04W 28/06

(54) **DATA TRANSMISSION METHOD AND APPARATUS, AND ELECTRONIC DEVICE, STORAGE MEDIUM AND CHIP**

(30) Priority: 29.01.2024 CN 202410123746
(71) Applicant: Huawei Technologies Co., Ltd., Shenzhen, Guangdong 518129 (CN)
(72) Inventor: WANG, Meng, Shenzhen, Guangdong 518129 (CN); ZHAO, Xiaoyu, Hong Kong, Shatin, NT Hong Kong 999077 (CN); LIU, Juan, Hong Kong, Shatin, NT Hong Kong 999077 (CN); ZHANG, Yingjun, Hong Kong, Shatin, NT Hong Kong 999077 (CN); HAN, Wei, Shenzhen, Guangdong 518129 (CN); CHEN, Xiang, Shenzhen, Guangdong 518129 (CN)
(74) Representative: Huawei European IPR
(86) International application number: PCT/CN2024/125289
(87) International publication number: WO 2025/161501

(57) **Abstract**

This application is applied to the field of communication technologies, and provides a data transmission method and apparatus, an electronic device, a storage medium, and a chip. In the method, a network device buffers a plurality of data frames, and each data frame is to be transmitted to one terminal device. The network device calculates a priority of each data frame based on a transmission success probability of each data frame, to determine a current to-be-transmitted first data frame. Because the transmission success probability for determining the priority is related to remaining transmission time and complete transmission time that correspond to the data frame, when the first data frame that needs to be transmitted is determined, both a quantity and quality of successfully transmitted data frames are considered, to successfully transmit as many data frames as possible.

## Description

This application claims priority to Chinese Patent Application No. 202410123746.5, filed with the China National Intellectual Property Administration on January 29, 2024 and entitled "DATA TRANSMISSION METHOD AND APPARATUS, ELECTRONIC DEVICE, STORAGE MEDIUM, AND CHIP", which is incorporated herein by reference in its entirety.

### TECHNICAL FIELD

This application relates to the communication field, and in particular, to a data transmission method and apparatus, an electronic device, a storage medium, and a chip.

### BACKGROUND

In a wireless communication network, extended reality (extended reality, XR) technologies have advantages such as a plurality of views and strong interactivity, can provide brand-new visual experience for users, and have great application values and great commercial potential. XR includes technologies such as virtual reality (virtual reality, VR), augmented reality (augmented reality, AR), and mixed reality (mixed reality, MR), and are widely applied to many fields such as entertainment, gaming, medical care, advertising, industry, online education, and engineering. Correspondingly, an XR terminal device may include devices such as VR glasses and AR glasses.

In some XR application scenarios, a service data stream provided by the XR terminal device is usually processed in a single frame. In addition, in different scenarios, each data frame may correspondingly include different content, and each data frame may be transmitted by using a plurality of data packets. For example, in a video transmission scenario, the service data stream is a data stream formed by several video frames, and one video frame may represent a part or all of content in a video picture. For another example, in a tactile transmission scenario, the service data stream is a data stream formed by several tactile frames, and one tactile frame may represent one piece of tactile information of a user. In these scenarios, when data is transmitted between the XR terminal device and a network device like a base station usually only a part of data of a data frame can be transmitted at a time. Therefore, the data frame can be successfully completely transmitted only after being transmitted a plurality of times.

However, because the data frame has a delay requirement, the network device clears remaining data of a data frame that is not completely transmitted within specified time. In this case, it is very likely that a data frame cannot be completely transmitted to a corresponding XR terminal device, and consequently, the data frame is invalid. Therefore, in the XR scenario, how to increase a rate of frames that are successfully transmitted becomes a problem that needs to be resolved.

### SUMMARY

To resolve the foregoing problem, embodiments of this application provide a data transmission method and apparatus, an electronic device, a storage medium, and a chip, to resolve a problem of increasing a rate of frames that are successfully transmitted.

According to a first aspect, an embodiment of this application provides a data transmission method. In an extended reality scenario, a first electronic device (for example, a network device below) and a plurality of second electronic devices (for example, terminal devices below) are included. The first electronic device includes a device like a base station, the second electronic device includes a device like VR glasses and AR glasses, and data frames need to be transmitted between the first electronic device and the plurality of second electronic devices. In addition, in a downlink transmission process, the first electronic device buffers a plurality of data frames, and needs to transmit each data frame to one second electronic device, and different data frames correspond to different second electronic devices. Because there are a large quantity of data frames that need to be transmitted, and transmission resources are limited, the first electronic device needs to determine a current to-be-transmitted first data frame from the plurality of buffered data frames. The first electronic device may determine, based on a transmission success probability of each data frame, the current to-be-transmitted first data frame, where the transmission success probability is used to evaluate a probability that the data frame is successfully transmitted. Then, the first electronic device transmits the first data frame to a second electronic device corresponding to the first data frame. The second electronic device corresponding to the first data frame is a second electronic device to which the first data frame is to be transmitted. It may be understood that, when determining the current to-be-transmitted first data frame, the first electronic device considers the transmission success probability of each data frame, and the transmission success probability is used to evaluate the probability that the data frame is successfully transmitted. Therefore, when transmitting the first data frame, the first electronic device can increase a rate of data frames that are successfully transmitted in data frames that need to be transmitted in a period of time.

In a possible implementation of the first aspect, the data frame is a data frame buffered by the first electronic device at a current moment, the current moment is any time point in a delay period, a start point of the delay period is an initial moment, and the transmission success probability is determined based on remaining transmission time and complete transmission time; the remaining transmission time is time required to completely transmit the data frame from the current moment, and the complete transmission time is time required to completely transmit the data frame from the initial moment; and the transmission success probability is negatively correlated with both the remaining transmission time and the complete transmission time. It may be understood that specific data in the data frame dynamically changes with a transmission process, and during each transmission, the first electronic device needs to determine the data frame buffered by the first electronic device at the current moment. When the transmission success probability is determined, the remaining transmission time and the complete transmission time are considered. Because the remaining transmission time is the time required to completely transmit the data frame from the current moment, the remaining transmission time can reflect a quantity of data frames that can be successfully transmitted in a period of time when the current data frame is transmitted. Longer remaining transmission time indicates a lower probability that each data frame is successfully transmitted, and a smaller quantity of data frames that are completely successfully transmitted within specified time. The complete transmission time is the time required to completely transmit the data frame from the initial moment, and can reflect whether the current data frame can be completely transmitted in a specified delay period, and can reflect transmission quality of the data frame, thereby increasing a transmission success probability of the data frame.

In a possible implementation of the first aspect, the transmission success probability, the complete transmission time, and the remaining transmission time may satisfy the following relationship: $P 1 = g \left(ts\right) * h \left(tw\right)$

*P*1 is the transmission success probability; *t*s is the remaining transmission time; *g*(*t*s) is an emergency degree factor, where the emergency degree factor is negatively correlated with the remaining transmission time *t*s ; *t*w is the complete transmission time; and *h*(*tw*) is a success degree factor, where the success degree factor is negatively correlated with the complete transmission time *t*w. When the remaining transmission time is smaller, the emergency degree factor is larger, and the transmission success probability is higher. When the complete transmission time is smaller, the success degree factor is larger, and the transmission success probability is higher.

In a possible implementation of the first aspect, the emergency degree factor *g*(*t*s) and the remaining transmission time ts satisfy the following relationship: $g \left(ts\right) = {e}^{\left(-ts+{k}_{a}\right)}$

kₐ is a hyper-parameter, and is used to adjust a relationship between the emergency degree factor and the remaining transmission time. It may be understood that the emergency degree factor *g*(*ts*) and the remaining transmission time ts are in a non-linear relationship, and robustness is good.

In a possible implementation of the first aspect, the success degree factor *h(tw)* and the complete transmission time tw satisfy the following relationship: $h \left(tw\right) = \frac{1}{{e}^{\left(c\left(tw-μ*D\right)\right)} + 1}$

D represents the delay period; µ is a hyper-parameter, and is used to adjust a relationship between the complete transmission time and the delay period of the data frame; and c is a hyper-parameter, and is used to adjust a relationship between the complete transmission time and the success degree factor. It may be understood that the emergency degree factor *g*(*t*s) and the remaining transmission time ts are also in a non-linear relationship, and robustness is good.

In a possible implementation of the first aspect, the first electronic device determines the remaining transmission time in the following manner: The first electronic device determines the remaining transmission time of the data frame based on a data frame length of the data frame and an average quantity, of the data frame, of bits transmitted on a historical channel, where the average quantity of bits transmitted on the historical channel is an average quantity of bits that are supported in transmission on a channel between the first electronic device and a second electronic device corresponding to the data frame in a first historical period of time. It may be understood that the first electronic device may record a maximum quantity of bits that are supported in transmission on the channel corresponding to the data frame at each time point in the first historical period of time, and then calculate an average value of maximum quantities of bits on the channel at all time points in the first historical period of time, to obtain the average quantity, of the channel, of bits transmitted on the historical channel in the first historical period of time. In addition, a specific period of time in the first historical period of time may be configured in advance. For example, 1 ms before the current moment is used as a period of time for calculating the average quantity of bits transmitted on the historical channel each time, and then maximum quantities of bits that are supported in transmission and that correspond to all stored data frames in 1 ms before the current moment are averaged to obtain the average quantity of bits transmitted on the historical channel. Specifically, there are many manners for calculating the average quantity of bits transmitted on the historical channel. This is not limited herein. It may be understood that, the average quantity of bits transmitted on the historical channel reflects a trend of the maximum quantity of bits that are supported in transmission on the channel corresponding to each data frame, and the remaining transmission time can be properly obtained based on the data frame length of the data frame at the current moment and the average quantity, of the data frame, of bits transmitted on the historical channel.

In a possible implementation of the first aspect, the remaining transmission time *t*s satisfies: $t s = \frac{q}{\overline{r}}$

q represents the data frame length; and *r̅* represents the average quantity of bits transmitted on the historical channel.

In a possible implementation of the first aspect, the complete transmission time *t*w satisfies: $t w = w + \frac{q - r}{\overline{r}}$

w represents waiting time for the data frame to be transmitted, where the waiting time for the data frame to be transmitted is time from the initial moment to the current moment; q represents the data frame length; *r̅* represents the average quantity of bits transmitted on the historical channel; and *r* represents a quantity, of the data frame, of bits transmitted on a current channel, where the quantity of bits transmitted on the current channel is a maximum quantity of bits that are supported in transmission on a channel between the first electronic device and the second electronic device corresponding to the data frame at the current moment.

In a possible implementation of the first aspect, that the first electronic device determines, based on the transmission success probability of each data frame, the current to-be-transmitted first data frame includes: The first electronic device calculates a priority score of each data frame based on the transmission success probability of each data frame; and determines the first data frame based on the priority score. It may be understood that the first electronic device may calculate the priority score of each data frame, and a priority of transmitting each data frame can be intuitively learned from the priority score, to determine the first data frame.

In a possible implementation of the first aspect, the priority score of each data frame satisfies: $Pr iority = β * f \left(\cdot \right) * P 1$

Pr*iority* is the priority score, *β* is a hyper-parameter, and *f* (•) represents a channel preference factor, where the channel preference factor is related to a data frame length of the data frame, a quantity of bits transmitted on a current channel, an average quantity of bits transmitted on a historical channel; and the quantity of bits transmitted on the current channel is a maximum quantity of bits that are supported in transmission on a channel between the first electronic device and a second electronic device corresponding to the data frame at the current moment; and the average quantity of bits transmitted on the historical channel is an average quantity of bits that are supported in transmission on a channel between the first electronic device and the second electronic device corresponding to the data frame in a first historical period of time. It may be understood that the average quantity of bits transmitted on the historical channel is explained above. Details are not described herein again. It may be understood that, for the priority score, a transmission success probability of each data frame is considered, and a channel preference status corresponding to each data frame is also considered. This is more scientific and proper.

In a possible implementation of the first aspect, channel preference factor satisfies: $f \left(\cdot \right) = \frac{min \left\{r, q\right\}}{\overline{r}}$

*r* represents the quantity of bits transmitted on the current channel; *r̅* represents the average quantity of bits transmitted on the historical channel; and q represents the data frame length. It may be understood that the channel preference factor fully considers the quantity of bits transmitted on the current channel, the average quantity of bits transmitted on the historical channel, and the data frame length. This is more scientific and proper.

According to a second aspect, an embodiment of this application provides a data transmission method, applied to an extended reality scenario. The extended reality scenario includes a first electronic device and a plurality of second electronic devices. In a downlink transmission process, the second electronic device receives a first data frame transmitted by the first electronic device, where the first data frame is a first data frame in a plurality of data frames buffered by the first electronic device, each data frame corresponds to one second electronic device, and a manner of determining the first data frame is related to a transmission success probability of each data frame. It may be understood that, for beneficial effects of the method, refer to the beneficial effects related to the first aspect. Details are not described herein again.

According to a third aspect, an embodiment of this application provides a data transmission method. In the method, in an uplink transmission process, a first electronic device (for example, a network device below) needs to receive data frames transmitted by a plurality of second electronic devices (for example, terminal devices below), the first electronic device includes a device like a base station, and the second electronic device includes a device like VR glasses and AR glasses. Because transmission resources are limited, and the first electronic device can receive only a limited quantity of data frames sent by the second electronic device at a time, the first electronic device needs to determine a second electronic device that is allowed to transmit the data frame, and sends a transmission permission instruction to the second electronic device that is allowed to transmit the data frame. In this way, the second electronic device can transmit the data frame. Specifically, the first electronic device (for example, the network device below) detects data transmission request messages sent by the plurality of second electronic devices (for example, the terminal devices below), where the data transmission request message indicates the second electronic device to transmit a buffered data frame to the first electronic device; and determines, based on a transmission success probability corresponding to a data frame of each second electronic device, a current to-be-transmitted first data frame, where the transmission success probability is used to evaluate a probability that the data frame is successfully transmitted; the first electronic device sends a transmission permission instruction to a second electronic device corresponding to the first data frame; and the first electronic device receives the first data frame from the second electronic device corresponding to the first data frame. It may be understood that the first electronic device may determine, based on a transmission success probability of each data frame, the current to-be-transmitted first data frame, where the transmission success probability is used to evaluate a probability that the data frame is successfully transmitted. Then, the first electronic device sends the transmission permission instruction to the second electronic device corresponding to the first data frame. When determining the current to-be-transmitted first data frame, the first electronic device considers the transmission success probability of each data frame, and the transmission success probability is used to evaluate the probability that the data frame is successfully transmitted. Therefore, a quantity of data frames that are successfully sent by all the second electronic devices in a period of time can be increased.

In a possible implementation of the third aspect, the data frame is a data frame buffered by the first electronic device at a current moment, the current moment is any time point in a delay period, a start point of the delay period is an initial moment, and the transmission success probability is determined based on remaining transmission time and complete transmission time; the remaining transmission time is time required to completely transmit the data frame from the current moment, and the complete transmission time is time required to completely transmit the data frame from the initial moment; and the transmission success probability is negatively correlated with both the remaining transmission time and the complete transmission time. It may be understood that specific data in the data frame dynamically changes with a transmission process, and during each transmission, the first electronic device needs to determine the data frame buffered by the first electronic device at the current moment. When the transmission success probability is determined, the remaining transmission time and the complete transmission time are considered. Because the remaining transmission time is the time required to completely transmit the data frame from the current moment, the remaining transmission time can reflect a quantity of data frames that can be successfully transmitted in a period of time when the current data frame is transmitted. Longer remaining transmission time indicates a lower probability that each data frame is successfully transmitted, and a smaller quantity of data frames that are completely successfully transmitted within specified time. The complete transmission time is the time required to completely transmit the data frame from the initial moment, and can reflect whether the current data frame can be completely transmitted in a specified delay period, and can reflect transmission quality of the data frame, thereby increasing a transmission success probability of the data frame.

In a possible implementation of the third aspect, the transmission success probability, the complete transmission time, and the remaining transmission time may satisfy the following relationship: $P 1 = g \left(ts\right) * h \left(tw\right)$

*P*1 is the transmission success probability; *ts* is the remaining transmission time; *g(ts)* is an emergency degree factor, where the emergency degree factor is negatively correlated with the remaining transmission time *t*s ; *t*w is the complete transmission time; and *h(tw)* is a success degree factor, where the success degree factor is negatively correlated with the complete transmission time *t*w. When the remaining transmission time is smaller, the emergency degree factor is larger, and the transmission success probability is higher. When the complete transmission time is smaller, the success degree factor is larger, and the transmission success probability is higher.

In a possible implementation of the third aspect, the emergency degree factor *g*(*ts*) and the remaining transmission time ts satisfy the following relationship: $g \left(ts\right) = {e}^{\left(-ts+{k}_{a}\right)}$

kₐ is a hyper-parameter, and is used to adjust a relationship between the emergency degree factor and the remaining transmission time. It may be understood that the emergency degree factor *g*(*ts*) and the remaining transmission time ts are in a non-linear relationship, and robustness is good.

In a possible implementation of the third aspect, the success degree factor *h(tw)* and the complete transmission time tw satisfy the following relationship: $h \left(tw\right) = \frac{1}{{e}^{\left(c\left(tw-μ*D\right)\right)} + 1}$

D represents the delay period; µ is a hyper-parameter, and is used to adjust a relationship between the complete transmission time and the delay period of the data frame; and c is a hyper-parameter, and is used to adjust a relationship between the complete transmission time and the success degree factor. It may be understood that the emergency degree factor *g*(*ts*) and the remaining transmission time ts are also in a non-linear relationship, and robustness is good.

In a possible implementation of the third aspect, the first electronic device determines the remaining transmission time in the following manner: The first electronic device determines the remaining transmission time of the data frame based on a data frame length of the data frame and an average quantity, of the data frame, of bits transmitted on a historical channel, where the average quantity of bits transmitted on the historical channel is an average quantity of bits that are supported in transmission on a channel between the first electronic device and a second electronic device corresponding to the data frame in a first historical period of time. It may be understood that the first electronic device may record a maximum quantity of bits that are supported in transmission on the channel corresponding to the data frame at each time point in the first historical period of time, and then calculate an average value of maximum quantities on bits of the channel at all time points in the first historical period of time, to obtain the average quantity, of the channel, of bits transmitted on the historical channel in the first historical period of time. In addition, a specific period of time in the first historical period of time may be configured in advance. For example, 1 ms before the current moment is used as a period of time for calculating the average quantity of bits transmitted on the historical channel each time, and then maximum quantities of bits that are supported in transmission and that correspond to all stored data frames in 1 ms before the current moment are averaged to obtain the average quantity of bits transmitted on the historical channel. Specifically, there are many manners for calculating the average quantity of bits transmitted on the historical channel. This is not limited herein. It may be understood that, the average quantity of bits transmitted on the historical channel reflects a trend of the maximum quantity of bits that are supported in transmission on the channel corresponding to each data frame, and the remaining transmission time can be properly obtained based on the data frame length of the data frame at the current moment and the average quantity, of the data frame, of bits transmitted on the historical channel.

In a possible implementation of the third aspect, the remaining transmission time satisfies: $t s = \frac{q}{\overline{r}}$

q represents the data frame length; and *r̅* represents the average quantity of bits transmitted on the historical channel.

In a possible implementation of the third aspect, the complete transmission time *t*w satisfies: $t w = w + \frac{q - r}{\overline{r}}$

w represents waiting time for the data frame to be transmitted, where the waiting time for the data frame to be transmitted is time from the initial moment to the current moment; q represents the data frame length; *r̅* represents the average quantity of bits transmitted on the historical channel; and *r* represents a quantity, of the data frame, of bits transmitted on a current channel, where the quantity of bits transmitted on the current channel is a maximum quantity of bits that are supported in transmission on a channel between the first electronic device and the second electronic device corresponding to the data frame at the current moment.

In a possible implementation of the third aspect, that the first electronic device determines, based on the transmission success probability of each data frame, the current to-be-transmitted first data frame includes: The first electronic device calculates a priority score of each data frame based on the transmission success probability of each data frame; and determines the first data frame based on the priority score. It may be understood that the first electronic device may calculate the priority score of each data frame, and a priority of transmitting each data frame can be intuitively learned from the priority score, to determine the first data frame.

In a possible implementation of the third aspect, the priority score of each data frame satisfies: $Pr iority = β * f \left(\cdot \right) * P 1$

Pr*iority* is the priority score, *β* is a hyper-parameter, and *f* (•) represents a channel preference factor, where the channel preference factor is related to a data frame length of the data frame, a quantity of bits transmitted on a current channel, an average quantity of bits transmitted on a historical channel; and the quantity of bits transmitted on the current channel is a maximum quantity of bits that are supported in transmission on a channel between the first electronic device and a second electronic device corresponding to the data frame at the current moment; and the average quantity of bits transmitted on the historical channel is an average quantity of bits that are supported in transmission on a channel between the first electronic device and the second electronic device corresponding to the data frame in a first historical period of time. It may be understood that the average quantity of bits transmitted on the historical channel is explained above. Details are not described herein again. It may be understood that, for the priority score, a transmission success probability of each data frame is considered, and a channel preference status corresponding to each data frame is also considered. This is more scientific and proper.

In a possible implementation of the third aspect, channel preference factor satisfies: $f \left(\cdot \right) = \frac{min \left\{r, q\right\}}{\overline{r}}$

*r* represents the quantity of bits transmitted on the current channel; *r̅* represents the average quantity of bits transmitted on the historical channel; and q represents the data frame length. It may be understood that the channel preference factor fully considers the quantity of bits transmitted on the current channel, the average quantity of bits transmitted on the historical channel, and the data frame length. This is more scientific and proper.

It may be understood that, in this process, the first electronic device may determine the to-be-transmitted first data frame in a manner the same as that in the first aspect. For specific beneficial effects, refer to the possible implementations of the first aspect. Details are not described herein again.

According to a fourth aspect, an embodiment of this application provides a data transmission method, applied to an extended reality scenario. The extended reality scenario includes a first electronic device and a plurality of second electronic devices. In an uplink transmission process, the plurality of second electronic devices sends data transmission request messages to the first electronic device, where the data transmission request message indicates the second electronic device to transmit a buffered data frame to the first electronic device; a second electronic device corresponding to a first data frame receives a transmission permission instruction sent by the first electronic device, where a manner of determining the first data frame is related to a transmission success probability of a data frame buffered by each second electronic device; and the second electronic device corresponding to the first data frame sends the first data frame to the first electronic device.

According to a fifth aspect, an embodiment of this application provides a data transmission apparatus. The data transmission apparatus includes: a buffer module, configured to buffer a plurality of data frames, where each data frame is to be transmitted to one second electronic device; a determining module, configured to determine, based on a transmission success probability of each data frame, a current to-be-transmitted first data frame, where the transmission success probability is used to evaluate a probability that the data frame is successfully transmitted; and a transmission module, configured to transmit the first data frame to a second electronic device corresponding to the first data frame.

For example, in a downlink transmission process, the data transmission apparatus may be the network device 90A below.

In a possible implementation of the fifth aspect, the data frame is a data frame buffered by the buffer module at a current moment, the current moment is any time point in a delay period, a start point of the delay period is an initial moment, and the transmission success probability is determined based on remaining transmission time and complete transmission time; the remaining transmission time is time required to completely transmit the data frame from the current moment, and the complete transmission time is time required to completely transmit the data frame from the initial moment; and the transmission success probability is negatively correlated with both the remaining transmission time and the complete transmission time.

In a possible implementation of the fifth aspect, the transmission success probability satisfies: $P 1 = g \left(ts\right) * h \left(tw\right)$

*P*1 is the transmission success probability; *t*s is the remaining transmission time; *g(ts)* is an emergency degree factor, where the emergency degree factor is negatively correlated with the remaining transmission time *t*s ; *t*w is the complete transmission time; and *h(tw)* is a success degree factor, where the success degree factor is negatively correlated with the complete transmission time *t*w.

In a possible implementation of the fifth aspect, the emergency degree factor satisfies: $g \left(ts\right) = {e}^{\left(-ts+{k}_{a}\right)}$

kₐ is a hyper-parameter, and is used to adjust a relationship between the emergency degree factor and the remaining transmission time.

In a possible implementation of the fifth aspect, the success degree factor satisfies: $h \left(tw\right) = \frac{1}{{e}^{\left(c\left(tw-μ*D\right)\right)} + 1}$

D represents the delay period; µ is a hyper-parameter, and is used to adjust a relationship between the complete transmission time and the delay period of the data frame; and c is a hyper-parameter, and is used to adjust a relationship between the complete transmission time and the success degree factor.

In a possible implementation of the fifth aspect, the determining module is further configured to determine the remaining transmission time in the following manner: The determining module is further configured to determine the remaining transmission time of the data frame based on a data frame length of the data frame and an average quantity, of the data frame, of bits transmitted on a historical channel, where the average quantity of bits transmitted on the historical channel is an average quantity of bits that are supported in transmission on a channel between the data transmission apparatus and a second electronic device corresponding to the data frame in a first historical period of time.

In a possible implementation of the fifth aspect, the remaining transmission time *t*s satisfies: $t s = \frac{q}{\overline{r}}$

q represents the data frame length; and *r̅* represents the average quantity of bits transmitted on the historical channel.

In a possible implementation of the fifth aspect, the complete transmission time *t*w satisfies: $t w = w + \frac{q - r}{\overline{r}}$

w represents waiting time for the data frame to be transmitted, where the waiting time for the data frame to be transmitted is time from the initial moment to the current moment; q represents the data frame length; *r̅* represents the average quantity of bits transmitted on the historical channel; and *r* represents a quantity, of the data frame, of bits transmitted on a current channel, where the quantity of bits transmitted on the current channel is a maximum quantity of bits that are supported in transmission on a channel between the data transmission apparatus and the second electronic device corresponding to the data frame at the current moment.

In a possible implementation of the fifth aspect, that the determining module is configured to determine, based on the transmission success probability of each data frame, the current to-be-transmitted first data frame includes: The determining module is configured to calculate a priority score of each data frame based on the transmission success probability of each data frame; and the determining module is configured to determine the first data frame based on the priority score.

In a possible implementation of the fifth aspect, the priority score of each data frame satisfies: $Pr iority = β * f \left(\cdot \right) * P 1$

Pr*iority* is the priority score, *β* is a hyper-parameter, and *f* (•) represents a channel preference factor, where the channel preference factor is related to a data frame length of the data frame, a quantity of bits transmitted on a current channel, an average quantity of bits transmitted on a historical channel; and the quantity of bits transmitted on the current channel is a maximum quantity of bits that are supported in transmission on a channel between the data transmission apparatus and a second electronic device corresponding to the data frame at the current moment; and the average quantity of bits transmitted on the historical channel is an average quantity of bits that are supported in transmission on a channel between the data transmission apparatus and the second electronic device corresponding to the data frame in a first historical period of time.

In a possible implementation of the fifth aspect, channel preference factor satisfies: $f \left(\cdot \right) = \frac{min \left\{r, q\right\}}{\overline{r}}$

*r* represents the quantity of bits transmitted on the current channel; *r̅* represents the average quantity of bits transmitted on the historical channel; and q represents the data frame length.

According to a sixth aspect, an embodiment of this application provides a data transmission apparatus. The data transmission apparatus includes a processor and a memory, and the processor is configured to execute data in the memory, so that the data transmission apparatus performs any data transmission method in the first aspect and the implementations of the first aspect, or any data transmission method in the second aspect and the implementations of the second aspect.

According to a seventh aspect, an embodiment of this application provides a data transmission system. The system includes a first electronic device and a plurality of second electronic devices, the first electronic device is any data transmission apparatus in the sixth aspect or the implementations of the sixth aspect, or the data transmission apparatus in the sixth aspect; and the second electronic device is configured to receive a first data frame sent by the first electronic device.

For example, in a downlink transmission process, the data transmission system is the following data transmission system 90, the first electronic device is the network device 90A, and the second electronic device is the terminal device 90B.

According to an eighth aspect, an embodiment of this application provides a data transmission apparatus. The data transmission apparatus includes: a detection module, configured to detect data transmission request messages sent by a plurality of second electronic devices, where the data transmission request message indicates the second electronic device to transmit a buffered data frame to the data transmission apparatus; a determining module, configured to determine, based on a transmission success probability corresponding to a data frame of each second electronic device, a current to-be-transmitted first data frame, where the transmission success probability is used to evaluate a probability that the data frame is successfully transmitted; a sending module, configured to send a transmission permission instruction to a second electronic device corresponding to the first data frame; and a receiving module, configured to receive the first data frame from the second electronic device corresponding to the first data frame.

For example, in an uplink transmission process, the data transmission apparatus is the network device 1000A below, and the second electronic device is the terminal device 1000B.

According to a ninth aspect, an embodiment of this application provides a data transmission apparatus. The data transmission apparatus includes: a first sending module, configured to send a data transmission request message to a first electronic device, where the data transmission request message indicates the data transmission apparatus to transmit a buffered data frame to the first electronic device; a receiving module, configured to receive a transmission permission instruction sent by the first electronic device; and a second sending module, configured to send a first data frame to the first electronic device, where a manner of determining the first data frame is related to a transmission success probability of the data frame buffered by the data transmission apparatus.

For example, in an uplink transmission process, the data transmission apparatus may be the terminal device 1000B below, and the first electronic device is the network device 1000A.

According to a tenth aspect, an embodiment of this application provides a data transmission apparatus. The data transmission apparatus includes a processor and a memory, and the processor is configured to execute data in the memory, so that the data transmission apparatus performs any data transmission method in the third aspect and the implementations of the third aspect, or any data transmission method in the fourth aspect.

According to an eleventh aspect, an embodiment of this application provides a data transmission system. The system includes a first electronic device and a plurality of second electronic devices, the first electronic device is the data transmission apparatus according to the eighth aspect, and the second electronic device is the data transmission apparatus according to the ninth aspect.

For example, in an uplink transmission process, the data transmission system may be the data transmission system 1000 below.

According to a twelfth aspect, an embodiment of this application provides a readable storage medium. The readable medium stores instructions, and when the instructions are executed on an electronic device, the electronic device performs any data transmission method in the first aspect and the implementations of the first aspect, any data transmission method in the second aspect and the implementations of the second aspect, any data transmission method in the third aspect and the implementations of the third aspect, or any data transmission method in the fourth aspect and the implementations of the fourth aspect.

According to a thirteenth aspect, an embodiment of this application provides a chip. The chip is applied to an electronic device, to perform any data transmission method in the first aspect and the implementations of the first aspect, any data transmission method in the second aspect and the implementations of the second aspect, any data transmission method in the third aspect and the implementations of the third aspect, or any data transmission method in the fourth aspect and the implementations of the fourth aspect.

According to a fourteenth aspect, an embodiment of this application provides a computer program product. The computer program product includes computer program code. When the computer program code is run on a computer, the computer is enabled to perform any data transmission method in the first aspect and the implementations of the first aspect, any data transmission method in the second aspect and the implementations of the second aspect, any data transmission method in the third aspect and the implementations of the third aspect, or any data transmission method in the fourth aspect and the implementations of the fourth aspect.

For beneficial effects of the fourth aspect to the eleventh aspect, refer to beneficial effects related to the first aspect. Details are not described herein again.

### BRIEF DESCRIPTION OF DRAWINGS

FIG. 1A is a diagram of an architecture of a communication system 1000 according to some embodiments of this application;
FIG. 1B is a diagram of a video scenario corresponding to XR according to some embodiments of this application;
FIG. 2A is a diagram of a video frame F1 according to some embodiments of this application;
FIG. 2B is a diagram of successfully receiving a video frame F1 according to some embodiments of this application;
FIG. 2C is a diagram of failing to receive a video frame F1 according to some embodiments of this application;
FIG. 3A is a diagram of a queue corresponding to each video frame according to some embodiments of this application;
FIG. 3B is a diagram of states of each data frame before and after an i^{th} transmission according to some embodiments of this application;
FIG. 3C shows data packets transmitted during a T0^{th} transmission, a T1^{th} transmission, and a T2^{th} transmission according to some embodiments of this application;
FIG. 3D is a diagram of an impact relationship between a factor in a priority score and a priority according to some embodiments of this application;
FIG. 3E shows other data packets transmitted during a T0^{th} transmission, a T1^{th} transmission, and a T2^{th} transmission according to some embodiments of this application;
FIG. 4 is a diagram of a framework of a network side 400 and a terminal side 500 according to some embodiments of this application;
FIG. 5A and FIG. 5B are a diagram of interaction between a network device and a terminal device during downlink transmission according to some embodiments of this application;
FIG. 6A and FIG. 6B are a diagram of interaction between a network device and a terminal device during uplink transmission according to some embodiments of this application;
FIG. 7A is a diagram of a seven-layer model of an OSI according to some embodiments of this application;
FIG. 7B is an effect diagram of a simulation experiment according to some embodiments of this application;
FIG. 8 is a diagram of a structure of an apparatus 800 according to some embodiments of this application;
FIG. 9 is a diagram of a structure of a data transmission system 90 according to some embodiments of this application; and
FIG. 10 is a diagram of a structure of a data transmission apparatus system 1000 according to some embodiments of this application.

### DESCRIPTION OF EMBODIMENTS

The illustrative embodiments of this application include but are not limited to a data transmission method and apparatus, an electronic device, a storage medium, and a chip.

The following describes some terms in this application.

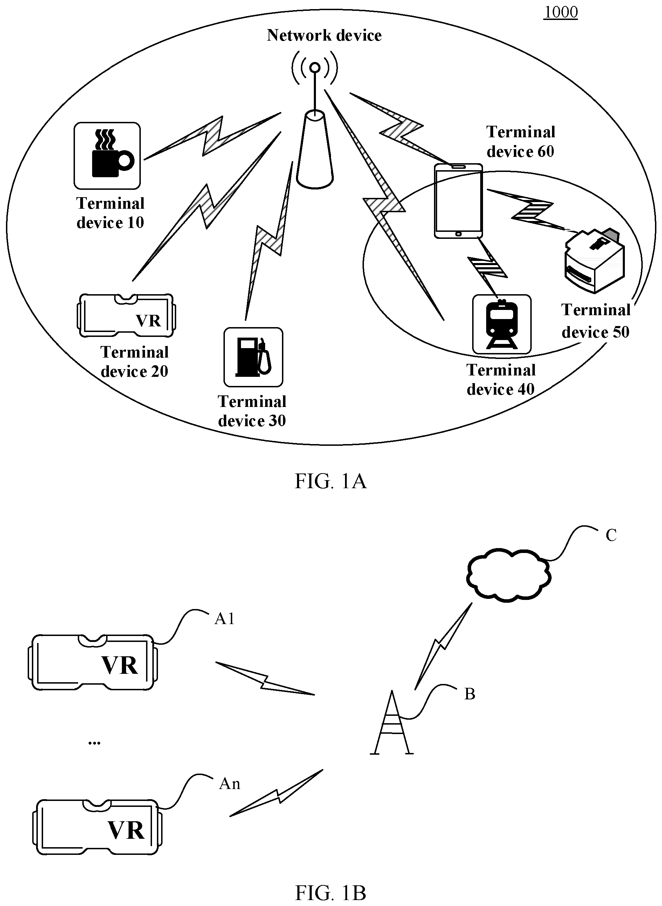

FIG. 1A is a diagram of an architecture of a communication system 1000 to which embodiments of this application are applied. As shown in FIG. 1A, the communication system includes a network device and a terminal device. The network device may be connected to the terminal device in a wireless or wired manner. One network device and six terminal devices are shown in the figure. The six terminal devices are a terminal device 10, a terminal device 20, a terminal device 30, a terminal device 40, a terminal device 50, and a terminal device 60.

For example, in an example shown in FIG. 1A, an example in which the terminal device 10 is a smart teacup, the terminal device 20 is VR glasses, the terminal device 30 is a smart fuel dispenser, the terminal device 40 is a vehicle, the terminal device 50 is a mobile phone, and the terminal device 60 is a printer is used for description.

It may be understood that, in some cases, when data is transmitted between the network device and the terminal device, a service data stream is transmitted frame by frame, that is, in a form of "frame". During downlink data transmission, there are a plurality of queues in the network device, and content of one data frame is buffered in each queue. In addition, the network device transmits the data frame stored in the queue to one terminal device. Different data frames correspond to different terminal devices. During uplink data transmission, the terminal device also has one queue, and sends, when allowed by the network device, a data frame in the queue to the network device.

It may be understood that, because communication resources are limited, in a downlink process, during each transmission, the network device selects a terminal device, and sends a part or all of data of a data frame in a queue corresponding to the terminal device to the corresponding terminal device. In an uplink process, during each transmission, the terminal device, when allowed by the network device, sends a part or all of data of a data frame buffered in a queue to the network device each time.

For ease of description, a part or all of data in a data frame that needs to be transmitted between the network device and the terminal device during each downlink or uplink transmission is referred to as a "data packet", that is, is used as a data transmission unit during transmission.

During downlink transmission, the following describes this solution by using an example in which the network device is a base station and each terminal device is VR glasses.

FIG. 1B is a diagram of a video scenario corresponding to XR according to some embodiments of this application. In this scenario, a plurality of users may separately play games via VR glasses A1 to An. In this case, the VR glasses A1 to An may exchange data with a cloud C via a base station B. A video frame generated by the cloud C is sent to the base station B. At the base station B, each pair of VR glasses corresponds to one queue, and a video frame to be transmitted to corresponding VR glasses is buffered in each queue, in other words, one video frame corresponds to one pair of VR glasses. Each pair of the VR glasses A1 to An may receive a video frame that includes game picture content and that is sent by the base station B. During transmission, because communication resources are limited, one video frame can be completely transmitted only after being transmitted a plurality of times.

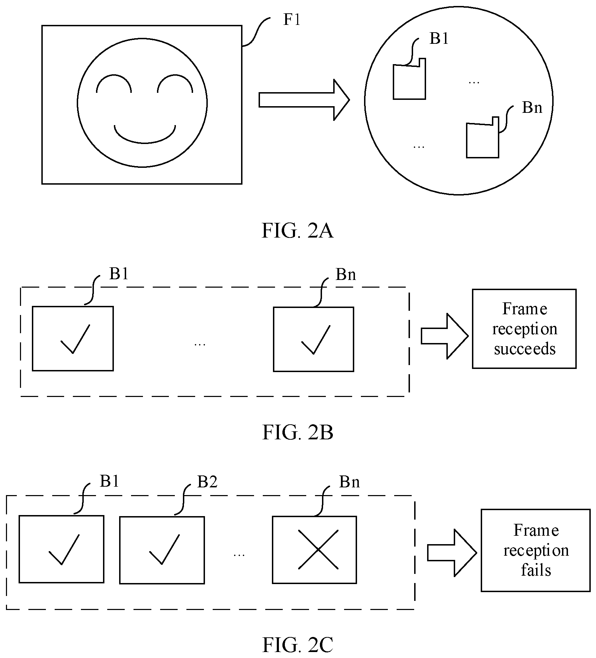

Still refer to FIG. 2A. It is assumed that the cloud C generates a video frame F1, and the video frame F1 includes smiling face content. After receiving the video frame F1, the base station B buffers the video frame F1 in a queue corresponding to the VR glasses A1. All data of the video frame F1 is initially buffered in the queue. It may be understood that, because communication resources are limited, after receiving a plurality of video frames and respectively storing the video frames in queues, the base station B calculates priorities of the video frames in the queues, determines a video frame that needs to be transmitted, and then transmits data in the determined video frame based on an amount of data allowed to be transmitted. In a subsequent transmission process, the base station B is to transmit data in the video frame to the VR glasses A1 a plurality of times. After each transmission, a length of the video frame in the queue changes. After a plurality of transmissions, all data (namely, the video frame F1) initially buffered in the queue may be sent to the VR glasses A1. When all data in the video frame F1 is completely transmitted n times, data of a data frame transmitted each time is denoted as data packets B1, B2, ..., and Bn.

It may be understood that a plurality of data packets B1 to Bn corresponding to a same video frame are usually associated. If one or more data packets in the video frame sent by the VR glasses A1 fail to be received, the video frame may fail to be decoded, and finally cannot be displayed. Consequently, user experience is affected. For example, as shown in FIG. 2B, the VR glasses A1 successfully receive the data packets B1 to Bn, and the VR glasses A1 may obtain the video frame F1 based on the received data packets B1 to Bn. In this case, it is considered that the video frame F1 is successfully received. As shown in FIG. 2C, in some cases, the VR glasses A1 may alternatively fail to receive a part of data packets, for example, fail to receive the data packet Bn. In this case, even if the VR glasses A1 successfully receive the other data packets, it is considered that the video frame F1 fails to be received, and the video frame F1 may not be decoded for display. Therefore, when each XR terminal device performs single-frame data transmission with the base station B, transmission integrity of the data frame needs to be considered, to ensure a success rate of completing transmission of each data frame.

The following describes the transmission process in detail.

In some embodiments, after the cloud C generates data, the data generated by the cloud C arrives at the base station B in batches, and all data corresponding to a same frame arrives at the base station B at the same time (that is, arrives in a same batch). In this case, a data frame that needs to be transmitted (for example, in addition to the foregoing video frame, a tactile frame may be further included) is buffered in each queue in the base station B, and sizes of the data frames may be different.

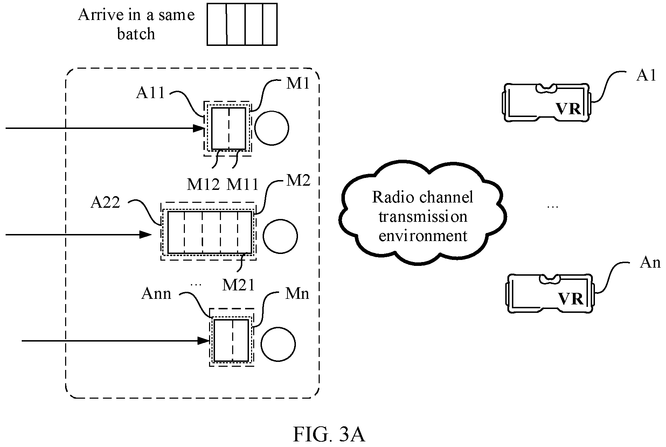

For example, as shown in FIG. 3A, a plurality of queues A11 to Ann are disposed in the base station, and the data frame M1 to Mn are respectively buffered in the queues A11 to Ann. An example in which the base station respectively transmits the data frames M1 to Mn to the VR glasses A1 to An is used for description. Specifically, the data frame M1 that needs to be sent by the base station B to the VR glasses A1 may be buffered in the queue A11, the data frame M2 that needs to be sent by the base station B to the VR glasses A2 may be buffered in the queue A22, ..., and the data frame Mn that needs to be sent by the base station B to the VR glasses An may be buffered in the queue Ann.

It may be understood that bandwidth resources of the base station B are limited. In some cases, the base station B can communicate with only a limited quantity of XR terminal devices during each transmission. For example, during current transmission, the base station B can perform transmission with only the VR glasses A1, and during next transmission, the base station B can perform transmission with only the VR glasses A2. In this case, contention exists between the XR terminal devices. Then, during each transmission, the base station B calculates a priority of each data frame, and transmits a data frame that meets a priority condition (for example, a priority level meets a first threshold) to corresponding VR glasses. In addition, after each transmission performed by the base station B, a data frame length of the transmitted data frame changes, in other words, after each transmission, the data frame changes dynamically with the transmission process.

For example, if the bandwidth resource of the base station B allows transmission with two XR terminal devices at a time, the base station B transmits two data frames with a highest priority level and a second highest priority level (namely, a first priority level and a second priority level) to corresponding VR glasses each time. For another example, if the bandwidth resource of the base station B allows transmission with one XR terminal device at a time, the base station B transmits a data frame with a highest priority level to corresponding VR glasses each time. Still refer to FIG. 3A. An example in which the base station B transmits one data frame each time is used. Because the base station B can transmit only one data frame each time, the base station B successfully transmits the data frame M1 to the VR glasses A1 only after determining the data frame M1 as the highest priority twice, in other words, twice corresponds to transmission of the data packet M11 and transmission of the data packet M12; successfully transmits the data frame M2 to the VR glasses A2 only after determining the data frame M12 as the highest priority five times; ...; and successfully transmits the data frame Mn to the VR glasses An only after determining the data frame M1n as the highest priority twice.

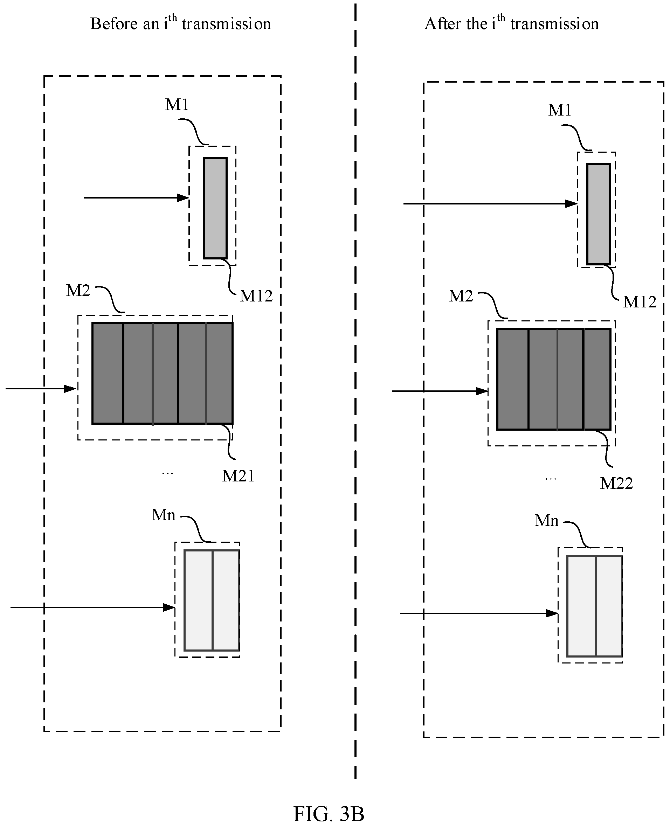

For clearer understanding, FIG. 3B shows a comparison diagram of a dynamic change of each data frame before and after transmission when the base station B transmits a data frame at a time. FIG. 3B shows a diagram of a data frame change of each data frame of the base station B before and after transmission when the base station B performs an i^{th} transmission. It is assumed that data transmitted by the base station during the i^{th} transmission is data of the data frame M2. Refer to FIG. 3B. Before the base station B performs the i^{th} transmission, the data frame M1 is remaining data after the data packet M11 is completely transmitted, and it is assumed that the data packet M12 is subsequently transmitted to the VR glasses A1. The data frame M2 has not been determined as the highest priority after the priority is calculated for the first time, and therefore the data frame M2 is all data received by the base station B from the cloud, ..., and the data frame Mn has not been determined as the highest priority after the priority is calculated for the first time, and therefore the data frame Mn is all data received by the base station B from the cloud. It is assumed that the base station B determines to transmit the data frame M2 to the VR glasses A2 during the i^{th} transmission. In this case, the base station B transmits the data in the data frame M2 to the VR glasses A2 by using the data packet M12. In this case, after the i^{th} transmission, the data in the data frame M2 decreases an amount of data in the data packet M21, and data in other data frames remains unchanged. Therefore, data in the queue dynamically changes with transmission of the base station B.

It may be understood that the frame has a delay constraint. To be specific, after arriving at the base station B, the data frame needs to be completely transmitted in a delay period (for example, 10 ms). Otherwise, data that is not successfully transmitted in each queue is cleared, and correspondingly, each XR terminal device cannot successfully receive the data frame. For example, in some embodiments, the delay period may be 10 ms, to be specific, every 0.5 ms is one slot, and 10 ms includes 20 slots. For the data frame M1 in FIG. 3A, after the data packet M11 is completely transmitted, remaining data in the queue A11, namely, partial data that has not been transmitted in the data frame M1, is not completely transmitted within specified time. In this case, the remaining data that belongs to the data frame M1 and that is in the queue A11 is cleared, and the VR glasses A1 cannot receive the complete data frame M1. This means that the frame fails to be transmitted.

Currently, there are a plurality of methods for determining a priority of each data frame, for example, a proportional fairness (proportional fairness, PF) algorithm, a modified largest weighted delay first (modified largest weighted delay first, M-LWDF) algorithm. However, all current algorithms for determining the priority are optimized to achieve a maximum throughput or a minimum delay during data transmission, and a quantity of complete data frames received by each XR terminal device is not considered. Consequently, user quality of service (quality of service, QoS) is affected.

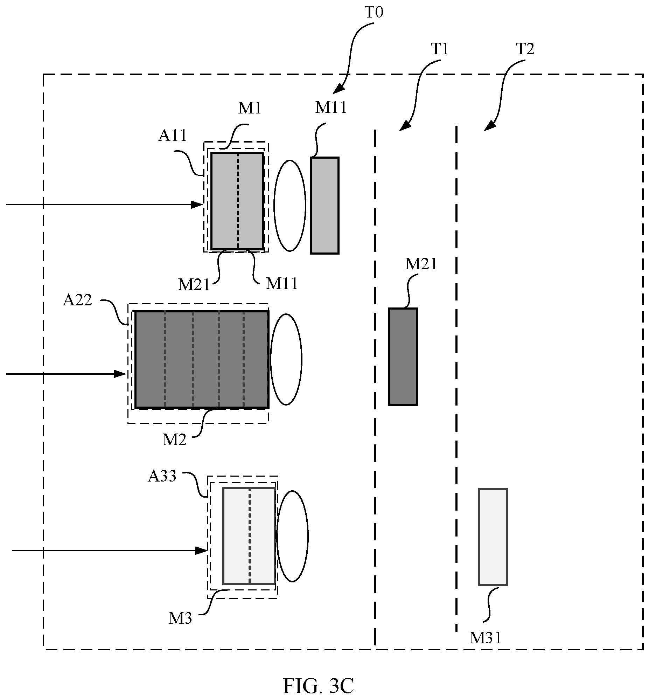

The proportional fairness algorithm is as an example. In various XR application scenarios, frame integrity and a frame delay of a data frame in a transmission process are closely related to quality of service, and the proportional fairness algorithm cannot ensure a rate of successfully arrived frames in a period of transmission time. For example, the base station B can transmit only one data packet of one data frame with a highest priority each time. Refer to FIG. 3C. During a T0^{th} transmission, it is assumed that a current channel of the VR glasses A1 is good, an instant rate is high, and a priority is the highest. In this case, the base station B transmits, to the VR glasses A1, the data packet M11 corresponding to the data frame M1. During a T1^{th} transmission, it is assumed that a current channel of the VR glasses A2 is good, an instant rate is high, an average rate is low, and a priority is the highest. In this case, the base station B transmits, to the VR glasses A2, the data packet M21 corresponding to the data frame M2. During a T2^{th} transmission, it is assumed that a current channel of the VR glasses A3 is good, an instant rate is high, an average rate is low, and a priority is highest. In this case, the base station B transmits, to the VR glasses A3, a data packet M31 corresponding to the corresponding data frame M3. It may be learned that, it is assumed that specified time is reached after three transmissions, in this case, there is still a large amount of remaining untransmitted data in queues that correspond to the VR glasses A1, the VR glasses A2, and the VR glasses A3, to be specific, the data frame M1, the data frame M2, and the data frame M3 all are not completely transmitted, in other words, the base station B fails to transmit content of any data frame. Consequently, user quality of service is affected.

It may be understood that, in a period of time, successful transmission of a corresponding data frame is closely related to quality of service. Therefore, when a priority of each data frame is determined, a channel status needs to be comprehensively considered, and information related to the data frame also needs to be considered, for example, information like transmission time of remaining data of a current frame, and a frame delay period requirement.

Therefore, to resolve the foregoing problem, this application proposes a data transmission method. In the method, when a first electronic device (for example, a network device like a base station) needs to perform data transmission with a plurality of second electronic devices (for example, terminal devices like VR glasses), when determining a data frame that needs to be transmitted, the first electronic device needs to consider a channel status of each second electronic device, and also needs to consider integrity of the data frame and a delay requirement of the data frame. Then, the first electronic device sends, based on the data frame that needs to be transmitted and that is determined by considering the integrity of the data frame and the delay requirement, the data frame to a corresponding second electronic device.

For example, during each transmission, the base station may consider a channel status, and also consider a possibility that a data frame is successfully transmitted. Specifically, when the data frame that needs to be transmitted is determined, a current to-be-transmitted first data frame is determined based on a transmission success probability of each data frame, where the transmission success probability is used to evaluate a probability that each data frame is successfully transmitted. The transmission success probability may be determined based on remaining transmission time and complete transmission time.

Specifically, the remaining transmission time is time required to completely transmit the data frame from a current moment, the current moment is any time point in a delay period, and a start point of the delay period is an initial moment. The complete transmission time is time required to completely transmit the data frame from the initial moment. It may be understood that the remaining transmission time indicates time required to transmit data that is buffered in each queue and that has not been transmitted at the current moment. Smaller remaining transmission time indicates that the data frame at the current moment can be quickly completely transmitted. Therefore, a priority may be increased, and the data frame is transmitted first, thereby increasing a quantity of frames that are successfully transmitted. However, as described above, transmission of the data frame has the frame delay requirement, that is, each frame of data needs to be completely transmitted in the delay period. Therefore, it is necessary to further consider the complete transmission time when the remaining transmission time is considered, in other words, whether the data frame at the current moment can be completely transmitted within specified time is considered, to improve transmission quality of the data frame. Therefore, it is necessary to consider whether the frame delay requirement is met when all data of a data frame buffered in the queue at the initial moment is completely transmitted. If the complete transmission time exceeds the frame delay requirement, a transmission priority of the current data frame may be reduced.

Therefore, on a basis of comprehensively considering the remaining transmission time and the complete transmission time, when performing each transmission, the first electronic device may determine a priority for each data frame based on the transmission success probability, then determine, based on the priority of each data frame, the to-be-transmitted first data frame, and then send the first data frame to a corresponding second electronic device.

It may be understood that, because the priority considers a channel status between the first electronic device and each second electronic device, and also considers a quantity and quality of successfully transmitted data frames in a transmission process, for example, the remaining transmission time and the complete transmission time mentioned above, data frames are transmitted as much as possible within specific time.

Specifically, in some embodiments, a priority score that can reflect the priority may be calculated for each data frame, and the priority of each data frame is determined based on a calculated value of the priority score corresponding to each data frame. A larger value of the priority score indicates a higher corresponding priority.

In some embodiments, the priority score includes a channel preference factor related to the channel status, and also includes an emergency degree factor of the data frame and a success degree factor. The emergency degree factor is negatively correlated with the remaining transmission time, and smaller remaining transmission time indicates a larger emergency degree factor and a higher priority. The success degree factor is also negatively correlated with the complete transmission time, and smaller complete transmission time indicates a larger success degree factor and a higher priority.

An example in which both the remaining transmission time and the complete transmission time are considered for the priority is used below for description, and an example in which the transmission success probability may be a product of the emergency degree factor and the success degree factor is used.

In some embodiments, the following formula (1-1) shows an expression of a relationship between a priority score of a data frame Li (corresponding to an XR terminal device Ei) and a transmission success probability, and the formula (1-2) shows an expression of a relationship between the transmission success probability, the remaining transmission time, and the complete transmission time: $Pr iority = β * f \left(\cdot \right) * P 1$ (I-1) $P 1 = g \left(ts\right) * h \left(tw\right)$ (I-2)

In the formula (1-1), P*riority* is the priority score, P1 is the transmission success probability, *f*(•) represents the channel preference factor, and *β* is a hyper-parameter. In the formula (1-2), *g(ts)* represents the emergency degree factor, *h*(*tw*) represents the success degree factor, *ts* is the remaining transmission time, and *tw* is the complete transmission time. In this embodiment of this application, a better channel status indicates a higher priority; a larger emergency degree factor indicates a higher priority; and a larger success degree factor indicates a higher priority.

In some embodiments, the channel preference factor *f*(•) may be obtained according to the following formula (2): $f \left(\cdot \right) = \frac{min \left\{{{r}_{i} , q}_{i}\right\}}{{\overline{r}}_{i}}$ (2)

*f* (•) represents the channel preference factor. rᵢ represents a quantity of bits transmitted on a current channel, namely, a current channel status, and is specifically a maximum quantity of bits that are supported in transmission on a channel between the corresponding XR terminal device Ei and the network device at a current moment. Larger rᵢ indicates a better channel status. qᵢ represents a data frame length of the data frame Li at the current moment, namely, a quantity of bits of the data frame Li that has not been transmitted at the current moment. min{rᵢ, qᵢ} represents a maximum quantity of bits, of the data frame Li, that can be transmitted on the current channel.

It may be understood that, although ri corresponding to the data frame Li is large, a maximum amount of data that can be transmitted currently does not exceed the data frame length qi of the data frame Li. r̅ᵢ̅ represents an average quantity of bits transmitted on a historical channel (namely, a historical channel status), and is specifically an average quantity of bits that are supported in transmission on a corresponding channel between the network device and the XR terminal device Ei in a historical period of time. It may be understood that the historical channel status reflects a channel quality trend of the network device and the XR terminal device Ei in a past period of time, and a specific calculation manner is not required. For example, the network device may record a maximum quantity of bits that are supported in transmission on the channel corresponding to the data frame at each time point in the historical period of time, and then calculate an average value of maximum quantities of bits on the channel at all time points in the historical period of time, to obtain the average quantity, of the channel, of bits transmitted on the historical channel in the historical period of time. It may be understood that, when the historical channel status is calculated, data of the current channel status may also be used for calculation, or may not be used. This is not required herein. Example 1: When the current channel status is not considered, a maximum of 6 bits, a maximum of 8 bits, and a maximum of 12 bits can be respectively transmitted at past three consecutive time points. In this case, maximum quantities of bits of data transmitted between the XR terminal device Ei and the network device at the past three consecutive time points are averaged to obtain the historical channel status as an average quantity of 8 bits. Example 2: When the current channel status is considered, a maximum of 6 bits, a maximum of 8 bits, and a maximum of 12 bits can be transmitted at the past three consecutive time points, and a maximum of 10 bits can be transmitted currently. In this case, an average quantity of transmitted bits corresponding to the historical period of time including the current moment is 9 bits.

It may be understood that the rate in the formula (2) reflects a channel preference status corresponding to the data frame Li. If the current channel is good and the historical channel is poor, it indicates that the current channel has an advantage. In this case, transmission needs to be performed immediately. If the current channel is good and the historical channel is also good, it indicates that the channel of the terminal device is always good, and the terminal device does not have an advantage in this case compared with a terminal device whose historical channel status is poor and current channel status is good.

It may be understood that, when the current channel status corresponding to the data frame Li becomes better, a priority is higher, so that a user with a high priority can make full use of the channel.

It may be understood that the channel preference factor may alternatively be another expression. This is not limited herein.

In some embodiments, the emergency degree factor *g(ts)* may be obtained according to the following formula (3-1) and formula (3-2): $g \left(ts\right) = {e}^{\left(-ts+{k}_{a}\right)}$ (3-1) $t s = \frac{{q}_{i}}{\overline{{r}_{i}}}$ (3-2)

In the formula (3-1), kₐ ≥ 0 is an adjustment parameter, namely, a hyper-parameter, and is used to adjust an impact degree of the emergency degree factor on a priority calculation result. In the formula (3-2), for qᵢ, rᵢ, and r̅ᵢ̅, refer to the descriptions of the foregoing formula (2). Details are not described herein again. In addition, in some other implementations, another calculation manner may also be used for calculating the remaining transmission time *t*s in the formula (3-2). For example, a numerator r̅ᵢ̅ is calculated based on the current channel status. This is not specifically required herein. It may be understood that, if the remaining transmission time corresponding to the data frame Li is smaller, it indicates that the data frame Li can be completely transmitted more quickly, and a transmission success probability increases.

In some embodiments, the success degree factor *h(tw)* may be obtained according to the following formulas (4-1) and (4-2): $h \left(tw\right) = \frac{1}{{e}^{\left(c\left(tw-μ*D\right)\right)} + 1}$ (4-1) $t w = {w}_{i} + \frac{{q}_{i} - {r}_{i}}{{\overline{r}}_{i}}$ (4-2)

In the formula (4-1), D represents a delay period corresponding to a frame hard delay constraint, and may be 10 ms, where 10 ms is 20 slots. c > 0 is a hyper-parameter. In some implementations, c = 1. µ > 0 is a hyper-parameter, and is used to adjust a relationship between the complete transmission time and the delay period of the data frame. In some implementations, µ = 1.

Formula (4-2) shows a calculation manner of the complete transmission time *t*w. tw may also be obtained in another manner. This is not limited herein. wᵢ is waiting time of the data frame Li, namely, time from an initial moment to the current moment of the data frame Li. For qᵢ, rᵢ, and r̅ᵢ̅, refer to the descriptions of the foregoing formula (2). This is not described herein again. $\frac{{q}_{i} - {r}_{i}}{\overline{{r}_{ι}}}$ represents time required to completely transmit remaining data in the data frame Li after the data frame Li is completely transmitted on the current channel. *tw - µ * D* represents values of the complete transmission time and the delay period. Larger complete transmission time indicates a larger value of *tw - µ* D* , a higher probability of transmission failure in this case, and a smaller value of the success degree factor. It may be understood that, the data frame Li may be monitored based on a value of the success degree factor, a data frame that cannot be successfully transmitted is identified in a timely manner, and a priority of the data frame is reduced.

It may be understood that the priority of each data frame may be updated during each transmission, or the priority of each data frame may be updated after a preset quantity of transmissions is completed. This is not required herein.

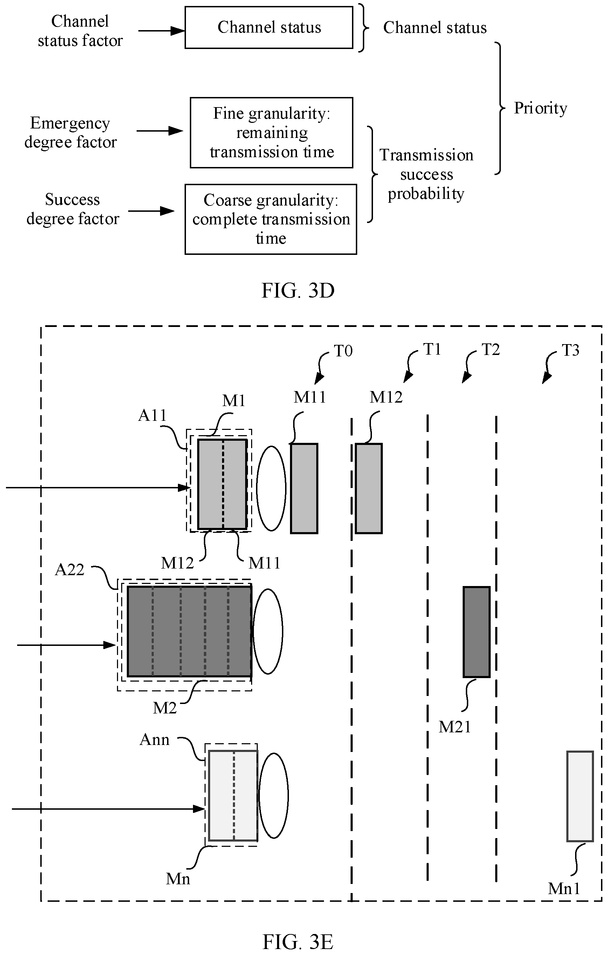

FIG. 3D is a diagram of an impact relationship between a factor in a priority score and a priority according to some embodiments of this application. As shown in FIG. 3D, a channel preference factor in the priority score reflects a preference status of a channel corresponding to each data frame, and an emergency degree factor and a success degree factor reflect a transmission success probability. Specifically, remaining transmission time mainly related to the emergency degree factor can further reflect a quantity of data frames that are all successfully transmitted within specific time. Longer required remaining transmission time indicates a lower probability that each data frame is successfully transmitted, and a smaller quantity of data frames that are all successfully transmitted within the specific time. The success degree factor relates to complete transmission time. The complete transmission time can reflect a failure degree of a queue in a delay constraint, and further reflect a probability that the data frame can be successfully transmitted. Smaller complete transmission time indicates a higher probability that the data frame is successfully transmitted.

It may be understood that, the foregoing formula (1-1) and formula (1-2) are observed. If the current channel is preferred, but if the emergency degree factor and the success degree factor are smaller, the priority is also lower. For example, if the data frame just arrives at the base station, a quantity of bits of the data frame is larger, and long transmission time is left. Therefore, transmission is not urgent enough, that is, the emergency degree factor *g*(ts) is smaller. In this case, the priority is reduced, an opportunity of transmitting another data frame is increased, and a frame satisfaction rate is increased.

It may be understood that, for the scenario shown in FIG. 1B, the base station B may calculate a priority score of a device of each pair of VR glasses according to the foregoing formula (1-1) to formula (4-2), and then determine a priority of each data frame based on the priority score, to determine a first data frame that needs to be transmitted, and then send data in the first data frame, namely, a data packet, to a corresponding terminal device. For example, refer to FIG. 3E. During a T0^{th} transmission, it is assumed that the base station B calculates that the data frame M1 has a highest priority. In this case, the base station B transmits, to the VR glasses A1, the data packet M11 corresponding to the data frame M1. During a T1^{th} transmission, it is assumed that the base station B calculates that the data frame M1 has a highest priority. In this case, the base station B continues to transmit, to the VR glasses A1, the data packet M12 corresponding to the data frame M1. During a T2^{th} transmission, it is assumed that the base station B calculates that the data frame M2 has a highest priority. In this case, the base station B transmits, to the VR glasses A2, the data packet M21 corresponding to the data frame M2. It can be found that, after three transmissions, the data frame M1 corresponding to the VR glasses A1 is successfully transmitted, and a frame satisfaction rate is increased.

For example, the following formula (5) shows an expression of a rate of frames that are successfully transmitted (also referred to as a "frame satisfaction rate"): $P = \frac{{\sum }_{i = 1}^{n} {y}_{i}}{{\sum }_{i = 1}^{n} {x}_{i}}$ (5)

xᵢ represents a quantity of frames transmitted to the XR terminal device Ei (i=1, 2, 3...n) within preset observation time T, and yᵢ represents a quantity of frames that are successfully transmitted to the XR terminal device Ei (i=1, 2, 3...n). A larger quantity of data frames that are successfully transmitted within specified time indicates a higher frame satisfaction rate.

It may be understood that, the scenario corresponding to the XR includes but is not limited to the video scenario mentioned above, and may be sensing scenarios such as a tactile scenario, an auditory scenario, and an olfaction scenario. Application scenarios of the base station and the XR device are not limited in embodiments of this application. Any scenario in which a service data stream is a data frame falls within the protection scope of this application. Details are not described herein.

In some embodiments of this application, the network device may be a device in a wireless network. For example, the network device may be a RAN node (or a device) that connects the terminal device to the wireless network, and may also be referred to as a base station. For example, the RAN device may be: a base station (base station), an evolved NodeB (evolved NodeB, eNodeB), a base station gNB (gNodeB) in a 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB, or a home NodeB, HNB), a baseband unit (baseband unit, BBU), a wireless fidelity (wireless fidelity, Wi-Fi) access point AP, and the like. In addition, in a network structure, the network device may include a central unit (central unit, CU) node, a distributed unit (distributed unit, DU) node, or a RAN device including a CU node and a DU node.

Optionally, the RAN node may alternatively be a macro base station, a micro base station, an indoor base station, a relay node, or a donor node, or may be a radio controller in a cloud radio access network (cloud radio access network, CRAN) scenario. The RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, the plurality of RAN nodes coordinate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP) or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand their meanings. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

The network device may be another apparatus that provides a wireless communication function to the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4th generation (4th generation, 4G) network, and an access and mobility management function (access and mobility management function, AMF), a user plane function (user plane function, UPF), and a session management function (session management function, SMF) in a 5G network. In addition, the core network device may further include another core network device in the 5G network and a next generation network of the 5G network.

In embodiments of this application, an apparatus configured to implement a function of the network device may be a network device; or may be an apparatus, for example, a chip system, that can support the network device in implementing the function. The apparatus may be mounted in the network device. In the technical solutions provided in embodiments of this application, the technical solutions provided in embodiments of this application are described by using an example in which the apparatus configured to implement the function of the network device is the network device.

In embodiments of this application, the terminal device may alternatively be a terminal in an internet of things (internet of things, IoT) system. IoT is an important component in development of future information technologies. A main technical feature of IoT is to connect an object to a network by using a communication technology, to implement an intelligent network of human-machine interconnection and thing-thing interconnection. The terminal in this application may be a terminal in machine type communication (machine type communication, MTC). The terminal in this application may be a vehicle-mounted module, a vehicle-mounted component, a vehicle-mounted chip, or a vehicle-mounted unit that is built in a vehicle as components or units. The vehicle may implement the method in this application by using the built-in vehicle-mounted module, vehicle-mounted component, vehicle-mounted chip, or vehicle-mounted unit. Therefore, embodiments of this application may be applied to an internet of vehicles, for example, vehicle-to-everything (vehicle-to-everything, V2X), long term evolution-vehicle (long term evolution vehicle, LTE-V), and vehicle-to-vehicle (vehicle-to-vehicle, V2V).

In this application, the terminal device may also be sometimes referred to as user equipment (user equipment, UE), an access terminal device, a vehicle-mounted terminal, an industrial control terminal, a UE unit, a UE station, a mobile station, a remote station, a remote terminal device, a mobile device, a UE terminal device, a wireless communication device, a machine terminal, a UE agent, a UE apparatus, or the like.

The terminal device in this application may be a VR terminal device, an AR terminal device, or an MR terminal device. The VR terminal, the AR terminal, and the MR terminal each may be referred to as an XR terminal device. For example, the XR terminal device may be a head-mounted device (for example, a helmet or glasses), or may be an all-in-one device, or may be a television, a display, a car, a vehicle-mounted device, a tablet, a smart screen, a holographic projector, a video player, a remote control robot, or a tactile internet terminal. The XR terminal can present XR data to a user, and the user can experience diversified XR services by wearing or using the XR terminal. The XR terminal may access a network in a wireless or wired manner, for example, access a network through a wireless fidelity (wireless fidelity, Wi-Fi) or 5G system. The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air.

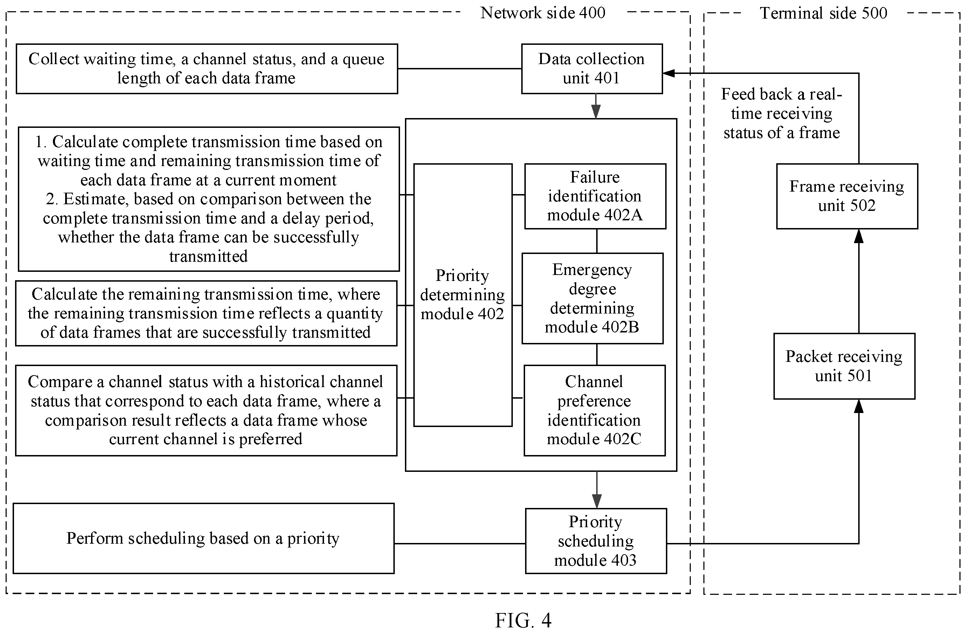

FIG. 4 is a diagram of a framework of a network side 400 and a terminal side 500 according to some embodiments of this application. The network side 400 represents a network device, and the terminal side 500 represents one or more terminal devices that perform transmission with the network device.

As shown in the figure, the network side 400 includes a data collection unit 401, a priority compute module 402, and a priority scheduling module 403. The terminal side 500 includes a packet receiving unit 501 and a frame receiving unit 502.

Specifically, the data collection unit 401 is configured to collect waiting time, a channel status, and a data frame length of each data frame on the terminal side 500. For example, waiting time of a first bit to be transmitted in the data frame may be considered as the waiting time of the data frame. In some implementations, when a buffer queue of a service data frame is on the network side, a scheduler reads waiting time of a first bit of each queue and a data frame length, and feeds back, to the network device via a terminal device corresponding to each data frame, channel state information (channel state information, CQI) of the terminal device, to obtain a channel status corresponding to each data frame.

The priority determining module 402 is configured to determine a priority of each data frame on the terminal side 500. Specifically, the priority compute module 402 calculates a priority score of each data frame, and determines the priority based on the priority score.

The priority determining module 402 includes a failure identification module 402A, an emergency degree determining module 402B, and a channel preference identification module 402C.

The failure identification module 402A is configured to: (1) calculate complete transmission time of each data frame based on waiting time and remaining transmission time of the data frame at a current moment; and (2) estimate, based on comparison between a value of the complete transmission time and a value of a delay period (for example, 10s) of the data frame, whether the data frame can be successfully transmitted. It may be understood that a probability that the data frame fails to be transmitted can be reflected based on the value of the complete transmission time and the value of the delay period (for example, 10s). In addition, the failure identification module 402A is further configured to determine a success degree factor related to a failure/success degree based on the complete transmission time and a delay constraint.

The emergency degree determining module 402B is configured to calculate the remaining transmission time, and is further configured to calculate an emergency degree factor based on the remaining transmission time. It may be understood that the remaining transmission time can reflect a quantity of data frames that are successfully transmitted.

The channel preference identification module 402C is configured to compare a channel status with a historical channel status that correspond to each data frame, and an obtained comparison result can reflect a data frame whose current channel is preferred; and is further configured to calculate a channel preference factor based on the channel status and the historical channel status that correspond to each data frame.

It may be understood that, the priority compute module 402 may calculate a priority score of each data frame based on the success degree factor obtained by the failure identification module 402A, the emergency degree factor obtained by the emergency degree determining module 402B, and the channel preference factor obtained by the channel preference identification module 402C, to determine a corresponding priority.

The priority scheduling module 403 is configured to perform scheduling according to a determined priority sequence. For example, a data packet corresponding to a data frame with a high priority may be transmitted according to the priority sequence.

The packet receiving unit 501 is configured to receive a data packet transmitted by the network device. It may be understood that, if a data frame is scheduled by the network device, a terminal device corresponding to the data frame may receive the data packet, and the terminal device collects statistics on data of the data packet, detects whether the data packet belongs to a last data packet of one frame, and if yes, transfers the information to the frame receiving unit 502.

The frame receiving unit 502 is configured to obtain a corresponding data frame based on received data packets corresponding to the same frame, and is further configured to reflect a real-time receiving status of the frame to the network side (for example, the data collection unit 401), for example, whether the data frame is successfully received. It may be understood that, if receiving the last data packet of the frame, the frame receiving unit 502 may transfer the message to the network device.

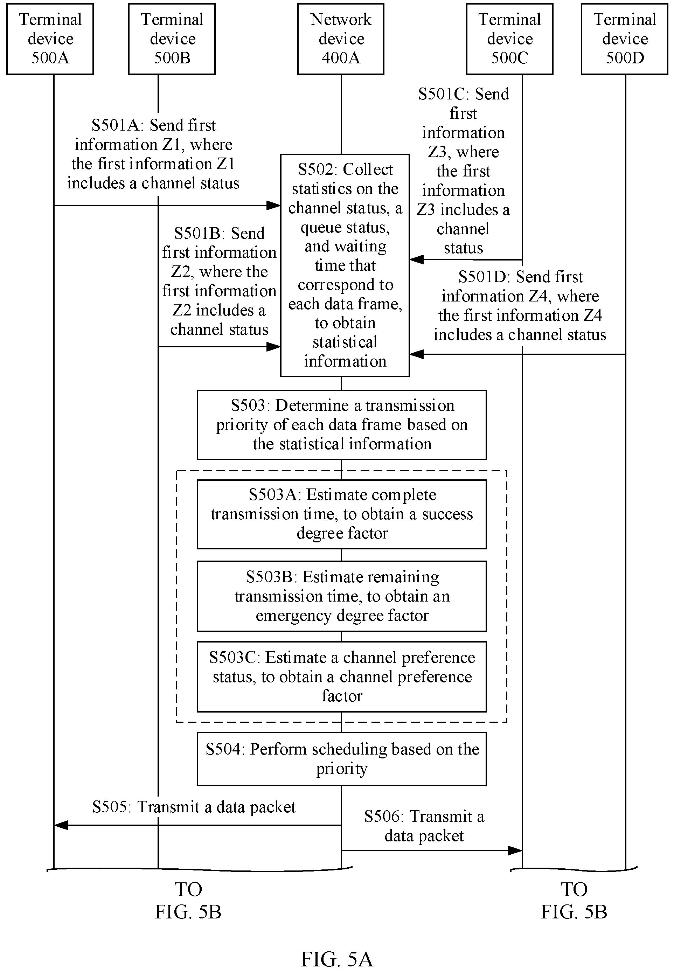

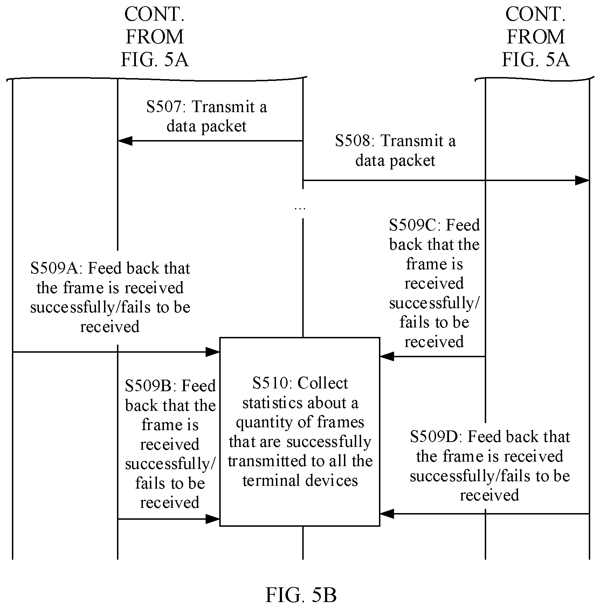

FIG. 5A and FIG. 5B are a diagram of interaction between a network device and a terminal device during downlink transmission according to an embodiment of this application.

FIG. 5A and FIG. 5B show a data transmission method in this application by using an example in which the network device and the terminal device are used as execution bodies of interaction examples. However, an execution body of the interaction is not limited in this application. Alternatively, the network device in FIG. 5A and FIG. 5B may be a chip, a chip system, or a processor that supports the network device in implementing the method, and the terminal device in FIG. 5A and FIG. 5B may be a chip, a chip system, or a processor that supports the terminal device in implementing the method. In addition, FIG. 5A and FIG. 5B are described by using an example in which a network device 400A can transmit only one data packet to one terminal device during one transmission.

A specific process is as follows.

S501A: A terminal device 500A sends first information Z1 to the network device 400A, where the first information Z1 includes a channel status.

In some embodiments, the channel status may include a maximum quantity of bits that are supported in transmission on a channel between the terminal device 500A and the network device 400A at a current moment, and is denoted as r1.

S501B: A terminal device 500B sends first information Z2 to the network device 400A, where the first information Z2 includes a channel status.

In some embodiments, the channel status may include a maximum quantity of bits that are supported in transmission on a channel between the terminal device 500B and the network device 400A at a current moment, and is denoted as r2.

S501C: A terminal device 500C sends first information Z3 to the network device 400A, where the first information Z3 includes a channel status.

In some embodiments, the channel status may include a maximum quantity of bits that are supported in transmission on a channel between the terminal device 500C and the network device 400A at a current moment, and is denoted as r3.

S501D: A terminal device 500D sends first information Z4 to the network device 400A, where the first information Z4 includes a channel status.

In some embodiments, the channel status may include a maximum quantity of bits that are supported in transmission on a channel between the terminal device 500D and the network device 400A at a current moment, and is denoted as r4.

It may be understood that there is no sequence of performing the foregoing steps S501A to S501D. For example, in some embodiments, the steps may be performed simultaneously, and in some other embodiments, the steps may be performed in another sequence.

S502: The network device 400A collects statistics on the channel status, a queue status, and waiting time that correspond to each data frame, to obtain statistical information.

It may be understood that the channel status obtained by the network device 400A through statistics collection includes a current channel status and also includes a historical channel status. The network device 400A may store a channel status corresponding to each data frame at each time point, to calculate a historical channel status based on a channel status in a past period of time. Specifically, the historical channel status may be updated based on the received current channel statuses r1, r2, r3, and r4 that correspond to each data frame, to obtain historical channel statuses r̅1̅, r̅2̅, r̅3̅, and r̅4̅ that correspond to each data frame. The terminal device 500A, the terminal device 500B, the terminal device 500C, and the terminal device 500D respectively correspond to a data frame LA, a data frame LB, a data frame LC, and a data frame LD.

It may be understood that the queue status represents a length of each queue, namely, a data frame length of a data frame stored in the queue. Specifically, data frame lengths that correspond to the terminal device 500A, the terminal device 500B, the terminal device 500C, and the terminal device 500D are respectively denoted as q1, q2, q3, and q4.

It may be understood that the waiting time is waiting time of each data frame at the current moment. Specifically, waiting time of the data frame LA, waiting time of the data frame LB, waiting time of the data frame LC, and waiting time of the data frame LD are respectively denoted as w1, w2, w3, and w4.

In some embodiments, the network device 400A collects statistics on a channel status, a queue status, and waiting time that correspond to each data frame, to obtain statistical information. The statistical information includes a current channel status, a historical channel status, the waiting time, and a data frame length that correspond to each data frame.

S503: The network device 400A determines a transmission priority of each data frame based on the statistical information.

In some embodiments, the network device 400A calculates a channel preference status, remaining transmission time, and complete transmission time based on the current channel status, the historical channel status, the data frame length, and the waiting time that correspond to each queue and that are included in the statistical information; and determines the priority corresponding to each data frame based on the channel preference status, the remaining transmission time, and the complete transmission time.

In some implementations, a priority score may be calculated based on the channel preference status, the remaining transmission time, and the complete transmission time, and the priority is determined based on a value of the priority score of each data frame. Specifically, a success degree factor, an emergency degree factor, and a channel preference factor that correspond to each queue are separately calculated based on the channel preference status, the remaining transmission time, and the complete transmission time, to obtain a specific priority score value. In addition, a larger value of the priority score indicates a higher priority.

The following steps S503A to S503C specifically describe specific steps of determining the success degree factor, the emergency degree factor, and the channel preference factor in some implementations.

S503A: The network device 400A estimates the complete transmission time, to obtain the success degree factor.

In some implementations, the network device 400A estimates the complete transmission time based on the waiting time w1, w2, w3, and w4, the data frame lengths q1, q2, q3, and q4, the channel statuses r1, r2, r3, and r4, and the historical channel statuses r̅1̅, r̅2̅, r̅3̅, and r̅4̅ that correspond to each data frame, and compares the complete transmission time with a pre-specified frame delay constraint, to obtain the success degree factor.

For example, with reference to the foregoing formula (4), a success degree factor h1 of the data frame LA, a success degree factor h2 of the data frame LB, a success degree factor h3 of the data frame LC, and a success degree factor h4 of the data frame LD are respectively calculated based on the waiting time w1, w2, w3, and w4, the data frame lengths q1, q2, q3, and q4, the channel statuses r1, r2, r3, and r4, and the historical channel statuses r̅1̅, r̅2̅, r̅3̅, and r̅4̅ that correspond to each data frame.

S503B: The network device 400A estimates the remaining transmission time, to obtain the emergency degree factor.

In some embodiments, the network device 400A estimates the remaining transmission time based on the data frame lengths q1, q2, q3, and q4 that correspond to each queue and the corresponding historical channel statuses r̅1̅, r̅2̅, r̅3̅, and r̅4̅, to determine the success degree factor.

For example, with reference to the foregoing formula (3), an emergency degree factor g1 of the data frame LA, an emergency degree factor g2 of the data frame LB, an emergency degree factor h3 of the data frame LC, and an emergency degree factor h4 of the data frame LD are respectively calculated based on the data frame lengths q1, q2, q3, and q4 that correspond to each queue and the corresponding historical channel statuses r̅1̅, r̅2̅, r̅3̅, and r̅4̅.

S503C: The network device 400A estimates the channel preference status, to obtain the channel preference factor.

In some embodiments, the network device 400A estimates the channel preference status based on the data frame lengths q1, q2, q3, and q4 of each queue, the corresponding channel statuses r1, r2, r3, and r4, and the historical channel statuses r̅1̅, r̅2̅, r̅3̅, and r̅4̅, to obtain the channel preference factor.

For example, with reference to the foregoing formula (2), a channel preference factor f1 of the data frame LA, a channel preference factor f2 of the data frame LB, a channel preference factor f3 of the data frame LC, and the channel preference factor f4 of the data frame LD are respectively calculated based on the data frame lengths q1, q2, q3, and q4 of each queue, the corresponding channel statuses r1, r2, r3, and r4, and the historical channel statuses r̅1̅, r̅2̅, r̅3̅, and r̅4̅.

It may be understood that there is no sequence for performing S503A to S503C, and specific processes may be split or combined.

It may be understood that, refer to the formula (1). The corresponding priority score is obtained based on the calculated success degree factor, the calculated emergency degree factor, and the calculated channel preference factor, to determine the priority based on the priority score.

S504: The network device 400A performs scheduling based on the priority.

In some embodiments, the network device 400A determines, based on the priority of each data frame and a current transmission resource, a to-be-transmitted first data frame, and transmits data in the first data frame to a corresponding terminal device, that is, transmits a data packet to the terminal device corresponding to the first data frame. If the current transmission resource is that N data packets may be transmitted, it is determined that data frames with top N high priorities are transmitted, that is, corresponding data packets are respectively transmitted to terminal devices corresponding to the data frames with top N high priorities. In some implementations, the network device 400A may perform precoding weight calculation, to implement specific scheduling.

For example, currently, the terminal device 500A has a highest priority score and a highest priority. In this case, the network device 400A needs to send a data packet from the data frame LA to the terminal device 500A.

S505: The network device 400A transmits a data packet to the terminal device 500A.

In some embodiments, during a t^{th} transmission, the network device 400A transmits the data packet from the data frame LA to the terminal device 500A.

It may be understood that, after completely transmitting the data packet from the data frame LA to a corresponding terminal device 500A, the network device 400A transmits a subsequent data packet. Each time a data packet from a data frame is transmitted subsequently, the priority determining process of the foregoing step S501A to step S504 needs to be performed, and then a data packet that needs to be transmitted is determined. It may be understood that, in each subsequent transmission, terminal devices that perform transmission with the network device may be the same or may be different. For example, subsequent S506, S507, and S508 respectively show terminal devices of transmission corresponding to the network device during a (t+1)^{th} transmission, a (t+2)^{th} transmission, and a (t+3)^{th} transmission.

S506: The network device 400A transmits a data packet to the terminal device 500C.

For next transmission, the network device 400A still receives a first message sent by each terminal device, determines a priority of each data frame according to steps S502 and S503, and then performs scheduling based on the priority of each data frame. It is assumed that the current terminal device 500C has a highest priority. In this case, the network device 400A transmits the data packet to the terminal device 500C.

In some embodiments, during the (t+1)^{th} transmission, the network device 400A transmits a data packet from the data frame LB to the terminal device 500C.

S507: The network device 400A transmits a data packet to the terminal device 500B.

In some embodiments, similarly, during the (t+2)^{th} transmission, the network device 400A may transmit a data packet from the data frame LC to the terminal device 500B.

S508: The network device 400A transmits a data packet to the terminal device 500D.

In some embodiments, similarly, during the (t+3)^{th} transmission, the network device 400A may transmit a data packet from the data frame LD to the terminal device 500C.

"..." in the figure may represent that the network device 400A continues to transmit a data packet with each terminal device for a period of time. It may be understood that the network device 400A may have transmitted a plurality of data frames to each terminal device, or may not successfully transmit one data frame. After receiving a complete data frame, for example, if each terminal device observes that a received data packet includes an identifier of a last data packet belonging to the data frame, it indicates that the complete data frame is received, and the terminal device feeds back, to the network device 400A, that the data frame is successfully received. If determining that no complete data frame is received, for example, under a delay constraint, each terminal device observes that a received data packet does not include an identifier of a last data packet belonging to a data frame, it indicates that no complete data frame is received, and the terminal device feeds back, to the network device 400A, that the data frame fails to be received. Specifically, the following steps S509A to S509D are shown. A sequence of S509A to S509D may be different, and another step may be included. Details are not described herein again.

S509A: The terminal device 500A feeds back, to the network device 400A, that the frame is received successfully/fails to be received.

It may be understood that, after a period of time, after receiving all data packets corresponding to a same data frame, the terminal device 500A may determine whether the received frame is complete, that is, whether the data frame is successfully received, and then feed back, to the network device 400A, whether the frame is successfully received or fails to be received.

In some implementations, the terminal device 500A may feed back a receiving success/failure status to the network device 400A after receiving one data frame, or may feed back a receiving status to the network device 400A after receiving a plurality of data frames. This is not limited herein.

S509B: The terminal device 500B feeds back, to the network device 400A, that the frame is received successfully/fails to be received.

S509C: The terminal device 500C feeds back, to the network device 400A, that the frame is received successfully/fails to be received.

S509D: The terminal device 500D feeds back, to the network device 400A, that the frame is received successfully/fails to be received.

Steps S509B to S509D are substantially the same as S509A, and details are not described herein again. In addition, an execution sequence of steps S509A to S509D is not limited.

S510: The network device 400A collects statistics about a quantity of frames that are successfully transmitted to all the terminal devices.

In some implementations, the network device 400A collects statistics, based on the received feedback information, on the quantity of frames that are successfully sent to all the terminal devices, so that a frame success status can be obtained.

It may be understood that an execution sequence of step S501 to step S510 is merely an example. In some other embodiments, another execution sequence may be used, or some steps may be split or combined. This is not limited herein.

It may be understood that the network device performs transmission based on the channel status of each terminal device, and also considers the remaining transmission time and the complete transmission time, to ensure a quantity of frames that are successfully transmitted within specified time, thereby increasing a frame satisfaction rate. It may be understood that, according to the foregoing transmission method, the frame satisfaction rate can be effectively increased, and user experience of a related service can be enhanced.

It may be understood that the foregoing describes the diagram of interaction between the network device and the terminal device during downlink transmission. During uplink transmission, a manner in which the network device and the terminal device determine a priority is essentially the same. The following describes a data transmission method corresponding to uplink transmission.

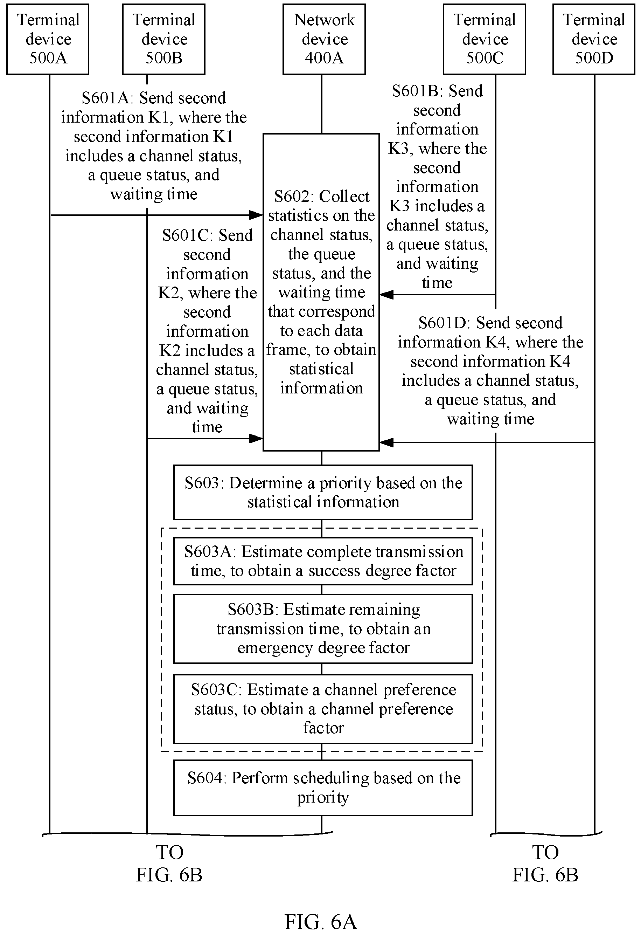

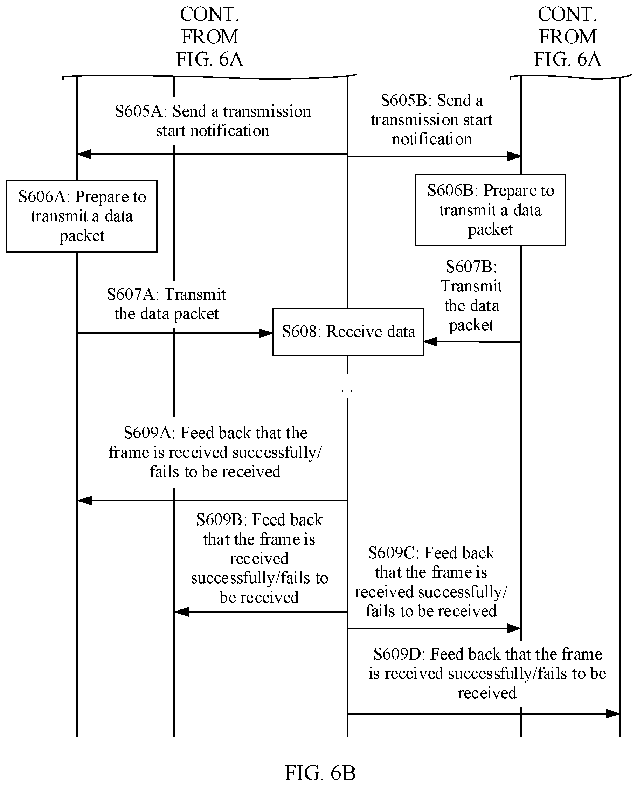

FIG. 6A and FIG. 6B are a diagram of interaction between a network device and a terminal device during uplink transmission according to an embodiment of this application.

It may be understood that FIG. 6A and FIG. 6B show a data transmission method in this application by using an example in which the network device and the terminal device are used as execution bodies of interaction examples. However, an execution body of the interaction is not limited in this application. In some other embodiments, the network device in FIG. 6A and FIG. 6B may be a chip, a chip system, or a processor that supports the network device in implementing the method, and the terminal device in FIG. 6A and FIG. 6B may be a chip, a chip system, or a processor that supports the terminal device in implementing the method. In addition, in FIG. 6A and FIG. 6B, an example in which a network device 400A can separately transmit one data packet to two terminal devices during one transmission is used for description.

A specific process is as follows.

S601A: A terminal device 500A sends second information K1 to the network device 400A, where the second information K1 includes a channel status, a queue status, and waiting time.

It may be understood that, in an uplink transmission process, each terminal device generates a data frame that needs to be transmitted, or receives a data frame from another terminal device, and needs to transmit a data frame in a buffer queue to the network device 400A. The terminal device 500A sends the channel status, the queue status, and the waiting time to the network device 400A. The channel status is essentially the same as that described in S501A in FIG. 5A and FIG. 5B. Details are not described herein again. The queue status and the waiting time are essentially the same as those described in S502 in FIG. 5A and FIG. 5B. Details are not described herein again.

S601B: Send second information K2, where the second information K2 includes channel information, a queue status, and waiting time.

S601C: Send second information K3, where the second information K3 includes channel information, a queue status, and waiting time.

S601D: Send second information K4, where the second information K4 includes channel information, a queue status, and waiting time.

Steps S601B to S601D are substantially the same as S601A. Details are not described herein again.

S602: The network device 400A collects statistics on the channel status, the queue status, and the waiting time that correspond to each queue, to obtain statistical information.

It may be understood that this step is substantially the same as step S502 in FIG. 5A and FIG. 5B. Details are not described herein again.

S603: The network device 400A calculates a priority based on the statistical information.

S603A: The network device 400A estimates complete transmission time, to obtain a success degree factor.

S603B: The network device 400A estimates remaining transmission time, to obtain an emergency degree factor.

S603C: The network device 400A estimates a channel preference status, to obtain a channel preference factor.

It may be understood that S603 and S603A to S603C are substantially the same as steps S503 and S503A to S503C in FIG. 5A and FIG. 5B. Details are not described herein again.

S604: The network device 400A performs scheduling based on the priority.

In some embodiments, the network device 400A determines, based on the priority of each data frame and a current transmission resource, a to-be-transmitted first data frame, and allows a terminal device corresponding to the first data frame to send a data packet. If the current transmission resource is that N data packets can be transmitted, terminal devices corresponding to queues with top N high priorities are allowed to transmit data packets.

For example, during one transmission, the network device 400A may perform transmission with two terminal devices, and a current data frame LA and a current data frame LC have highest priority scores and highest priorities. In this case, the network device 400A notifies the terminal device 500A and the terminal device 500C to send data frames, and notifies the terminal device 500A and the terminal device 500C that data packets are allowed to be sent.

S605A: The network device 400A sends a transmission start notification to the terminal device 500A.

In some embodiments, the network device 400A notifies the terminal device 500A to perform transmission.

S605B: The network device 400A sends a transmission start notification to the terminal device 500C.

In some embodiments, the network device 400A notifies the terminal device 500C to perform transmission.

It may be understood that there is no sequence for performing S605A and S605B.

S606A: The terminal device 500A prepares to transmit a data packet.

In some embodiments, after receiving the notification from the network device 400A, the terminal device 500A is authorized to perform transmission. In this case, the terminal device 500A prepares to transmit the data packet.

S606B: The terminal device 500C prepares to transmit a data packet.

It may be understood that this step is substantially the same as S606A. Details are not described herein again.

S607A: The terminal device 500A transmits the data packet to the network device 400A.

S607B: The terminal device 500B transmits the data packet to the network device 400A.

S608: The network device 400A receives data.

In some embodiments, the network device 400A receives data packets from the terminal device 500A and the terminal device 500C.

"..." in the figure may represent that after the terminal device 500A and the terminal device 500C have transmitted the determined data packets with the network device 400A, a corresponding data packet further needs to be transmitted between each terminal device and the network device 400A. It may be understood that a subsequent transmission process is essentially the same as the process of steps S601A to S608. During each transmission, a same terminal device may perform transmission to the network device 400A, or different terminal devices may perform transmission to the network device 400A, to obtain, based on a priority of each data frame determined during each transmission, a terminal device that is allowed to perform transmission. Details are not described again.

S609A: The network device 400A feeds back, to the terminal device 500A, that the frame is received successfully/fails to be received.

It may be understood that, after a period of time, the network device 400A feeds back, to the terminal device 500A, that the frame is received successfully/fails to be received.

S609B: The network device 400A feeds back, to the terminal device 500B, that the frame is received successfully/fails to be received.

S609C: The network device 400A feeds back, to the terminal device 500C, that the frame is received successfully/fails to be received.

S609D: The network device 400A feeds back, to the terminal device 500D, that the frame is received successfully/fails to be received.

Steps S609B to S609D are substantially the same as S609A, and a process of steps S609A to S609D is substantially the same as that of steps S509A to S509D. For specific descriptions, refer to the foregoing steps S509A to S509D. Details are not described herein again.

It may be understood that an execution sequence of step S601 to step S609 is merely an example. In some other embodiments, another execution sequence may be used, or some steps may be split or combined. This is not limited herein.

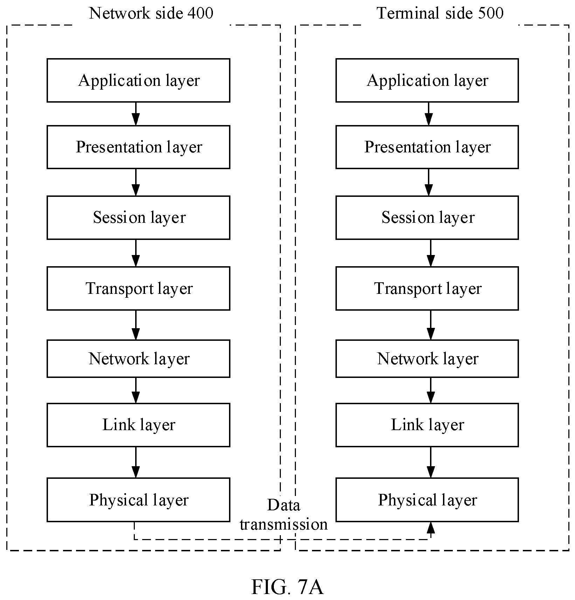

FIG. 7A is a diagram of a seven-layer model of an OSI according to some embodiments of this application.

As shown in FIG. 7A, a network side 400 corresponds to an application layer, a presentation layer, a session layer, a transport layer, a network layer, a link layer, and a physical layer. Each terminal device on a terminal side 500 also corresponds to an application layer, a presentation layer, a session layer, a transport layer, a network layer, a link layer, and a physical layer. A priority is determined and a corresponding data packet is transmitted at the link layer in a data transmission process.

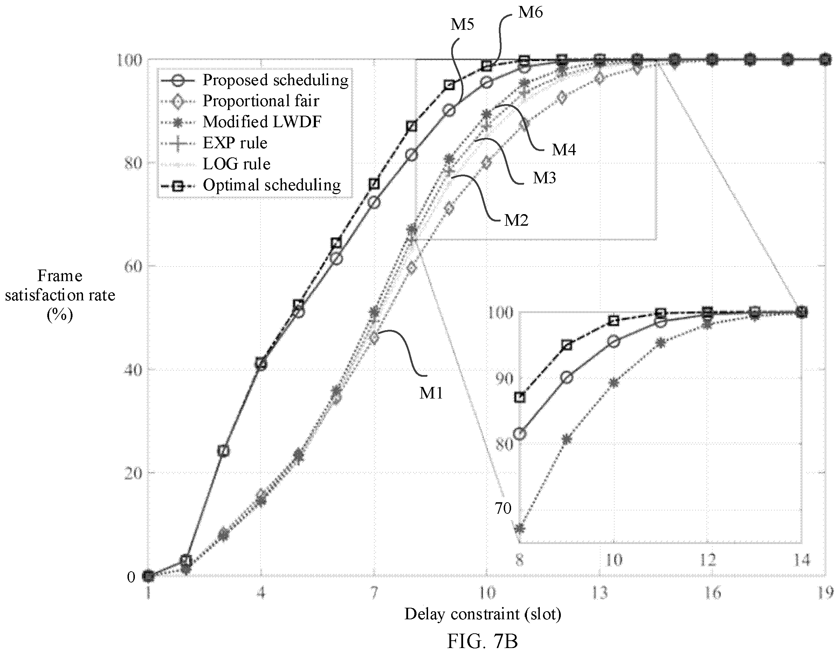

FIG. 7B is an effect diagram of an emulation experiment in which four terminal devices perform transmission in an XR service corresponding to different frame delay constraints (namely, different delay periodicities) according to some embodiments of this application. A horizontal coordinate is the frame delay constraint, and the frame delay constraint (namely, a delay period D) shown in the figure is 1 to 19 ms. In addition, a frame arrival period T=D+5, namely, a time period of arrival of two adjacent frames. A large-scale path loss and small-scale Rayleigh fading are used for a channel. A total quantity of emulation frames is e⁵.

As shown in FIG. 7B, the figure shows frame satisfaction rates corresponding to the data transmission method in this application and four other different scheduling manners. A curve 1 corresponds to a proportional fairness algorithm, a curve 2 corresponds to a logarithmic rule algorithm, a curve 3 corresponds to an exponential rule algorithm, a curve 4 corresponds to a modified largest weighted delay first algorithm, and a curve 5 corresponds to the method in this embodiment of this application. The curves 1 to 5 are average effect curves after a plurality of delays. A curve 6 is an optimal effect curve obtained in a plurality of emulations corresponding to the method in this embodiment of this application. However, as shown in FIG. 7B, it may be found that frame satisfaction rates corresponding to the curve M5 and the curve M6 in this embodiment of this application are better than that in another solution.

The following Table 1 shows improved data of a frame satisfaction rate in the data transmission solution in this embodiment of this application compared with another existing algorithm. Refer to Table 1. A first row is average frame satisfaction rate data of each method obtained after a plurality of experiments of each solution. A second row is an improvement proportion of the solution provided in this embodiment of this application compared with another solution. It can be found that the solution provided in this application has a good effect.

**Table 1**

| | Index | This solution | Proportional fairness algorithm | Exponential rule algorithm | Logarithmic rule algorithm | Modified largest weighted delay first algorithm |
|---|---|---|---|---|---|---|
| 1 | Frame satisfaction rate | 66.3% | 51.4% | 54.1% | 53.43% | 57.8% |
| 2 | Improvement proportion of this solution compared with this solution | NA | 29% | 22.3% | 24% | 19.8% |

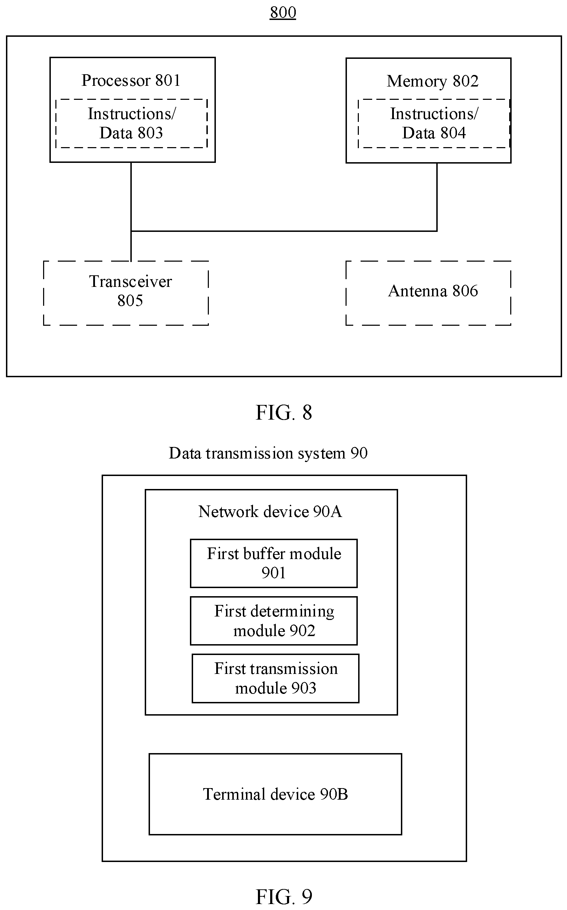

FIG. 8 is a diagram of a structure of an apparatus according to an embodiment of this application.

It should be understood that an apparatus 800 may be a network device, or may be a terminal device, or may be a chip, a chip system, a processor, or the like that supports a network device in implementing the foregoing method, or may be a chip, a chip system, a processor, or the like that supports a terminal device in implementing the foregoing method. This is not limited herein. The apparatus 800 may be configured to implement the methods described in the foregoing method embodiments. For details, refer to the descriptions in the foregoing method embodiments.

As shown in FIG. 8, the apparatus 800 may include one or more processors 801. The processor 801 may also be referred to as a processing unit, and may implement a specific control function. The processor 801 may be a general-purpose processor, a dedicated processor, or the like. For example, the processor 801 may be a baseband processor or a central processing unit. The baseband processor may be configured to process a communication protocol and communication data. The central processing unit may be configured to control a communication apparatus, for example, a base station, a baseband chip, a terminal, a terminal chip, a DU, or a CU, execute a software program, and process data of the software program.

In an optional design, the processor 801 may alternatively store instructions and/or data 803, and the instructions and/or data 803 may be run by the processor, to enable the apparatus 800 to perform the methods described in the foregoing method embodiments.

In another optional design, the processor 801 may include a transceiver unit configured to implement receiving and sending functions. For example, the transceiver unit may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 800 may include a circuit. The circuit may implement a sending, receiving, or communication function in the foregoing method embodiments.

Optionally, the apparatus 800 may include one or more memories 802. The memory stores instructions/data 804, and the instructions may be run on the processor, so that the apparatus 800 performs the methods described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 800 may further include a transceiver 805 and/or an antenna 806. The processor 801 may be referred to as a processing unit, and controls the apparatus 800. The transceiver 805 may be referred to as a transceiver unit, a transceiver, a transceiver circuit, a transceiver apparatus, an interface, an interface circuit, a transceiver module, or the like, and is configured to implement a receiving/sending function.

Optionally, the apparatus 800 in this embodiment of this application may be configured to perform the data transmission method described in FIG. 5A and FIG. 5B or FIG. 6A and FIG. 6B in embodiments of this application.

FIG. 9 is a diagram of a structure of a data transmission system 90 according to an embodiment of this application. As shown in the figure, a data transmission system 90 includes a network device 90A and a plurality of terminal devices 90B.

The network device 90A is configured to: buffer a plurality of data frames, where each data frame is to be transmitted to one terminal device 90B; and determine, based on a transmission success probability of each data frame, a current to-be-transmitted first data frame, where the transmission success probability is used to evaluate a probability that the data frame is successfully transmitted; and transmit the first data frame to a terminal device 90B corresponding to the first data frame; and the terminal device 90B is configured to receive the first data frame sent by the network device 90A.

Specifically, the network device 90A includes a buffer module 901, a determining module 902, and a transmission module 903.

The buffer module 901 is configured to buffer a plurality of data frames, where each data frame is to be transmitted to one second electronic device.

The determining module 902 is configured to determine, based on a transmission success probability of each data frame, a current to-be-transmitted first data frame, where the transmission success probability is used to evaluate a probability that the data frame is successfully transmitted.

The transmission module 903 is configured to transmit the first data frame to a terminal device 90B corresponding to the first data frame.

In some embodiments, the data frame buffered by the network device 90A is a data frame buffered by the buffer module 901 at a current moment, the current moment is any time point in a delay period, a start point of the delay period is an initial moment, and the transmission success probability is determined based on remaining transmission time and complete transmission time; the remaining transmission time is time required to completely transmit the data frame from the current moment, and the complete transmission time is time required to completely transmit the data frame from the initial moment; and the transmission success probability is negatively correlated with both the remaining transmission time and the complete transmission time.

In some embodiments, the determining module 902 is configured to determine the transmission success probability of the current to-be-transmitted first data frame of the network device 90A, where the transmission success probability satisfies: $P 1 = g \left(ts\right) * h \left(tw\right)$

*P*1 is the transmission success probability; *t*s is the remaining transmission time; *g(ts)* is an emergency degree factor, where the emergency degree factor is negatively correlated with the remaining transmission time *t*s ; *t*w is the complete transmission time; and *h(tw)* is a success degree factor, where the success degree factor is negatively correlated with the complete transmission time *t*w.

In some embodiments, the determining module 902 is configured to obtain the emergency degree factor, and the emergency degree factor satisfies: $g \left(ts\right) = {e}^{\left(-ts+{k}_{a}\right)}$

kₐ is a hyper-parameter, and is used to adjust a relationship between the emergency degree factor and the remaining transmission time.

In some embodiments, the determining module 902 is configured to obtain the success degree factor, and the success degree factor satisfies: $h \left(tw\right) = \frac{1}{{e}^{\left(c\left(tw-μ*D\right)\right)} + 1}$

D represents the delay period; µ is a hyper-parameter, and is used to adjust a relationship between the complete transmission time and the delay period of the data frame; and c is a hyper-parameter, and is used to adjust a relationship between the complete transmission time and the success degree factor.

In some embodiments, the determining module 902 is further configured to determine the remaining transmission time in the following manner: determining the remaining transmission time of the data frame based on a data frame length of the data frame and an average quantity, of the data frame, of bits transmitted on a historical channel, where the average quantity of bits transmitted on the historical channel is an average quantity of bits that are supported in transmission on a channel between the network device 90A and a terminal device 90B corresponding to the data frame in a first historical period of time.

In some embodiments, the determining module 902 is configured to obtain the remaining transmission time *t*s , and the remaining transmission time satisfies: $t s = \frac{q}{\overline{r}}$

q represents the data frame length; and *r̅* represents the average quantity of bits transmitted on the historical channel.

In some embodiments, the determining module is configured to obtain the complete transmission time *t*w, and the complete transmission time satisfies: $t w = w + \frac{q - r}{\overline{r}}$

w represents waiting time for the data frame to be transmitted, where the waiting time for the data frame to be transmitted is time of the data frame from the initial moment (namely, a start point of the delay period) to the current moment; q represents the data frame length, namely, a length of the data frame at the current moment; *r̅* represents the average quantity of bits transmitted on the historical channel; and *r* represents a quantity, of the data frame, of bits transmitted on a current channel, where the quantity of bits transmitted on the current channel is a maximum quantity of bits that are supported in transmission on a channel between the network device 90A and the second terminal device 90B corresponding to the data frame at the current moment.

In some embodiments, that the determining module 902 is configured to determine, based on the transmission success probability of each data frame, the current to-be-transmitted first data frame includes: The determining module 902 is configured to: calculate a priority score of each data frame based on the transmission success probability of each data frame; and determine the first data frame based on the priority score corresponding to each data frame.

In some embodiments, the determining module is configured to obtain the priority score, and the priority score satisfies: $Pr iority = β * f \left(\cdot \right) * P 1$

Pr*iority* is the priority score, *β* is a hyper-parameter, *f*(•) represents a channel preference factor, and *P*1 is the transmission success probability, where the channel preference factor is related to a data frame length of the data frame, a quantity of bits transmitted on a current channel, an average quantity of bits transmitted on a historical channel; and the quantity of bits transmitted on the current channel is a maximum quantity of bits that are supported in transmission on a channel between the network device 90A and a terminal device 90B corresponding to the data frame at the current moment; and the average quantity of bits transmitted on the historical channel is an average quantity of bits that are supported in transmission on a channel between the network device 90A and the terminal device 90B corresponding to the data frame in a first historical period of time.

In some embodiments, the determining module 902 is configured to obtain the channel preference factor, and the channel preference factor satisfies: $f \left(\cdot \right) = \frac{min \left\{r, q\right\}}{\overline{r}}$

*r* represents the quantity of bits transmitted on the current channel; *r̅* represents the average quantity of bits transmitted on the historical channel; and q represents the data frame length.

The terminal device 90B is configured to receive a first data frame transmitted by the network device 900A.

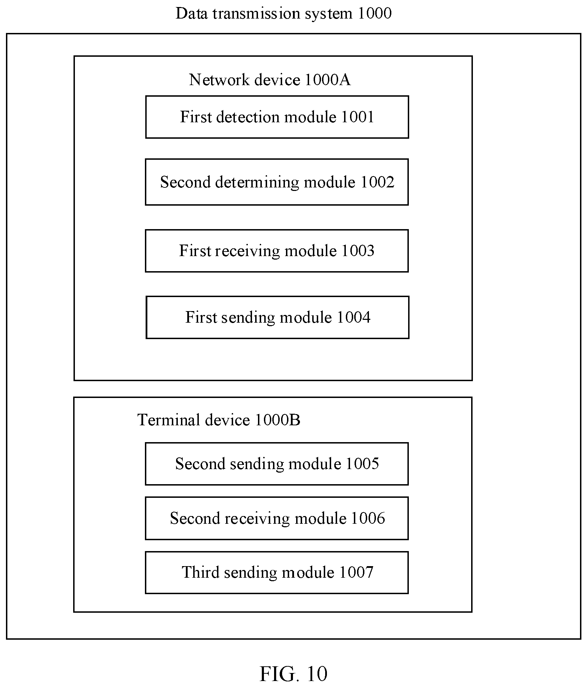

FIG. 10 is a diagram of a structure of a data transmission apparatus system according to an embodiment of this application. As shown in the figure, the data transmission apparatus system includes a network device 1000A and a plurality of terminal devices 1000B.

The network device 1000A is configured to detect data transmission request messages sent by the plurality of terminal devices 1000B, where the data transmission request message indicates the terminal device 1000B to transmit a buffered data frame to the network device 1000A; and is further configured to determine, based on a transmission success probability corresponding to a data frame of each terminal device 1000B, a current to-be-transmitted first data frame, where the transmission success probability is used to evaluate a probability that the data frame is successfully transmitted. The network device 1000A is further configured to send a transmission permission instruction to a terminal device 1000B corresponding to the first data frame, and is further configured to receive the first data frame from the terminal device 1000B corresponding to the first data frame.

The network device 1000A further includes: a detection module 1001, configured to detect data transmission request messages sent by the plurality of terminal devices 1000B, where the data transmission request message indicates the terminal device 1000B to transmit a buffered data frame to the network device 1000A; and a determining module 1002, configured to determine, based on a transmission success probability corresponding to a data frame of each terminal device 1000B, a current to-be-transmitted first data frame, where the transmission success probability is used to evaluate a probability that the data frame is successfully transmitted; a sending module 1003, configured to send a transmission permission instruction to a terminal device 1000B corresponding to the first data frame; and a receiving module 1004, configured to receive the first data frame from the terminal device 1000B corresponding to the first data frame.

The terminal device 1000B includes:
a first sending module 1005, configured to send a data transmission request message to the network device 1000A, where the data transmission request message indicates the terminal device 1000B to transmit a buffered data frame to the network device 1000A;
a receiving module 1006, configured to receive a transmission permission instruction sent by the network device 1000A; and
a second sending module 1007, configured to send a first data frame to the network device 1000A, where a manner of determining the first data frame is related to a transmission success probability of the data frame buffered by the data transmission apparatus.

According to the method provided in embodiments of this application, this application further provides a computer program product. The computer program product includes computer program code. When the computer program code is run on a computer, the computer is enabled to implement the steps performed by the apparatus 800 in any one of the foregoing embodiments. According to the method provided in embodiments of this application, this application further provides a computer-readable medium. The computer-readable medium stores program code. When the program code is run on a computer, the computer is enabled to implement the steps performed by the apparatus 800 in any one of the foregoing embodiments.

According to the method provided in embodiments of this application, this application further provides a chip. The chip is applied to a network device or a terminal device, to perform the foregoing data transmission method.

The processor and the transceiver described in this application may be implemented on an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may also be manufactured by using various IC process technologies, for example, a complementary metal oxide semiconductor (complementary metal oxide semiconductor, CMOS), an N-type metal oxide semiconductor, a P-type metal oxide semiconductor (positive channel metal oxide semiconductor, PMOS), and a bipolar junction transistor.

The apparatus described in the foregoing embodiment may be a network device or a terminal device. However, a range of the apparatus described in this application is not limited thereto, and a structure of the apparatus 800 may not be limited to FIG. 8. The apparatus 800 may be an independent device, or may be a part of a larger device. For example, the apparatus may be: (1) an independent integrated circuit IC, a chip, a chip system, or a subsystem; (2) a set with one or more ICs, where optionally, the IC set may also include a storage component configured to store data and/or instructions; (3) an ASIC, for example, a modem; (4) a module that can be embedded in another device; (5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or (6) others.

According to the method provided in embodiments of this application, this application further provides a computer program product. The computer program product includes computer program code. When the computer program code is run on a computer, the computer is enabled to implement the steps performed by the apparatus 800 in any one of the foregoing embodiments. According to the method provided in embodiments of this application, this application further provides a computer-readable medium. The computer-readable medium stores program code. When the program code is run on a computer, the computer is enabled to implement the steps performed by the apparatus 800 in any one of the foregoing embodiments.

Embodiments disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code may be applied to input instructions to perform the functions described in this application and generate output information. The output information may be applied to one or more output devices in a known manner. For a purpose of this application, a processing system includes any system having a processor like a digital signal processor (DSP), a microcontroller, an application-specific integrated circuit (ASIC), or a microprocessor.

The program code may be implemented in a high-level programming language or an object-oriented programming language to communicate with the processing system. The program code can also be implemented in an assembly language or a machine language when needed. The mechanisms described in this application are not limited to the scope of any particular programming language. In any case, the language may be a compiled language or an interpretive language.

In some cases, the disclosed embodiments may be implemented in hardware, firmware, software, or any combination thereof. The disclosed embodiments may be implemented as instructions that are carried or stored on one or more transitory or non-transitory machine-readable (for example, computer-readable) storage media and that may be read and executed by one or more processors. For example, the instructions may be distributed over a network or through another computer-readable medium. Therefore, the machine-readable medium may include any mechanism for storing or transmitting information in a machine (for example, a computer)-readable form, including but not limited to a floppy disk, a compact disc, an optical disc, read-only memories, a magnetic optical disk, a read-only memory, a random access memory, an erasable programmable read-only memory, an electrically erasable programmable read-only memory, a magnetic card, an optical card, a flash memory, or a tangible machine-readable memory used to transmit information (for example, a carrier, an infrared signal, or a digital signal) by using a propagating signal in an electrical, optical, acoustic, or another form over the internet. Therefore, the machine-readable medium includes any type of machine-readable medium suitable for storing or transmitting an electronic instruction or information in the machine (for example, computer)-readable form.

In the accompanying drawings, some structure or method features may be shown in a particular arrangement and/or order. However, it should be understood that such specific arrangement and/or ordering may not be required in some embodiments. In some embodiments, these features may be arranged in a manner and/or an order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that: In the examples and specification of this patent, relational terms such as first and second are merely used to distinguish one entity or operation from another, and do not necessarily require or imply any such actual relationship or order between these entities or operations. Moreover, the terms "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device which includes the element. Although this application has been illustrated and described with reference to some preferred embodiments of this application, a person of ordinary skill in the art should understand that various changes may be made to this application in terms of form and details without departing from the scope of this application.

## Claims

1. A data transmission method, applied to an extended reality scenario, wherein the extended reality scenario comprises a first electronic device and a plurality of second electronic devices, and the method comprises:
buffering, by the first electronic device, a plurality of data frames, wherein each data frame is to be transmitted to one second electronic device;
determining, by the first electronic device based on a transmission success probability of each data frame, a current to-be-transmitted first data frame, wherein the transmission success probability is used to evaluate a probability that the data frame is successfully transmitted; and
transmitting, by the first electronic device, the first data frame to a second electronic device corresponding to the first data frame.

2. The method according to claim 1, wherein the data frame is a data frame buffered by the first electronic device at a current moment, the current moment is any time point in a delay period, a start point of the delay period is an initial moment, and the transmission success probability is determined based on remaining transmission time and complete transmission time;
the remaining transmission time is time required to completely transmit the data frame from the current moment, and the complete transmission time is time required to completely transmit the data frame from the initial moment; and
the transmission success probability is negatively correlated with both the remaining transmission time and the complete transmission time.

3. The method according to claim 2, wherein the transmission success probability satisfies: $P 1 = g \left(ts\right) * h \left(tw\right) ,$ wherein *P1* is the transmission success probability; *t*s is the remaining transmission time; *g*(*ts*) is an emergency degree factor, wherein the emergency degree factor is negatively correlated with the remaining transmission time *t*s ; *t*w is the complete transmission time; and *h*(*tw*) is a success degree factor, wherein the success degree factor is negatively correlated with the complete transmission time *t*w.

4. The method according to claim 3, wherein the emergency degree factor satisfies: $g \left(ts\right) = {e}^{\left(-ts+{k}_{a}\right)} ,$ wherein kₐ is a hyper-parameter, and is used to adjust a relationship between the emergency degree factor and the remaining transmission time.

5. The method according to claim 3, wherein the success degree factor satisfies: $h \left(tw\right) = \frac{1}{{e}^{\left(c\left(tw-μ*D\right)\right)} + 1} ,$ wherein D represents the delay period; µ is a hyper-parameter, and is used to adjust a relationship between the complete transmission time and the delay period of the data frame; and c is a hyper-parameter, and is used to adjust a relationship between the complete transmission time and the success degree factor.

6. The method according to claim 4, wherein the remaining transmission time is determined in the following manner:
determining the remaining transmission time of the data frame based on a data frame length of the data frame and an average quantity, of the data frame, of bits transmitted on a historical channel, wherein the average quantity of bits transmitted on the historical channel is an average quantity of bits that are supported in transmission on a channel between the first electronic device and a second electronic device corresponding to the data frame in a first historical period of time.

7. The method according to claim 6, wherein the remaining transmission time *t*s satisfies: $t s = \frac{q}{\overline{r}} ,$ wherein q represents the data frame length; and *r̅* represents the average quantity of bits transmitted on the historical channel.

8. The method according to claim 7, wherein the complete transmission time *t*w satisfies: $t w = w + \frac{q - r}{\overline{r}} ,$ wherein w represents waiting time for the data frame to be transmitted, wherein the waiting time for the data frame to be transmitted is time from the initial moment to the current moment; q represents the data frame length; *r̅* represents the average quantity of bits transmitted on the historical channel; and *r* represents a quantity, of the data frame, of bits transmitted on a current channel, wherein the quantity of bits transmitted on the current channel is a maximum quantity of bits that are supported in transmission on a channel between the first electronic device and the second electronic device corresponding to the data frame at the current moment.

9. The method according to any one of claim 3, wherein determining, by the first electronic device based on the transmission success probability of each data frame, the current to-be-transmitted first data frame comprises:
calculating, by the first electronic device, a priority score of each data frame based on the transmission success probability of each data frame; and
determining the first data frame based on the priority score.

10. The method according to claim 9, wherein the priority score of each data frame satisfies: $Pr iority = β * f \left(\cdot \right) * P 1 ,$ wherein
Pr *iority* is the priority score, *β* is a hyper-parameter, and *f* (•) represents a channel preference factor, wherein the channel preference factor is related to a data frame length of the data frame, a quantity of bits transmitted on a current channel, an average quantity of bits transmitted on a historical channel; and
the quantity of bits transmitted on the current channel is a maximum quantity of bits that are supported in transmission on a channel between the first electronic device and a second electronic device corresponding to the data frame at the current moment; and the average quantity of bits transmitted on the historical channel is an average quantity of bits that are supported in transmission on a channel between the first electronic device and the second electronic device corresponding to the data frame in a first historical period of time.

11. The method according to claim 10, wherein the channel preference factor satisfies: $f \left(\cdot \right) = \frac{min \left\{r, q\right\}}{\overline{r}} ,$ wherein *r* represents the quantity of bits transmitted on the current channel; *r̅* represents the average quantity of bits transmitted on the historical channel; and q represents the data frame length.

12. A data transmission method, applied to an extended reality scenario, wherein the extended reality scenario comprises a first electronic device and a plurality of second electronic devices, and the method comprises:
receiving, by the second electronic device, a first data frame transmitted by the first electronic device, wherein the first data frame is a first data frame in a plurality of data frames buffered by the first electronic device, each data frame is to be transmitted to one second electronic device, and a manner of determining the first data frame is related to a transmission success probability of each data frame.

13. A data transmission method, applied to an extended reality scenario, wherein the extended reality scenario comprises a first electronic device and a plurality of second electronic devices, and the method comprises:
detecting, by the first electronic device, data transmission request messages sent by the plurality of second electronic devices, wherein the data transmission request message indicates the second electronic device to transmit a buffered data frame to the first electronic device;
determining, by the first electronic device based on a transmission success probability corresponding to a data frame of each second electronic device, a current to-be-transmitted first data frame, wherein the transmission success probability is used to evaluate a probability that the data frame is successfully transmitted;
sending, by the first electronic device, a transmission permission instruction to a second electronic device corresponding to the first data frame; and
receiving, by the first electronic device, the first data frame from the second electronic device corresponding to the first data frame.

14. The method according to claim 13, wherein the first electronic device performs the method according to any one of claims 2 to 11.

15. A data transmission method, applied to an extended reality scenario, wherein the extended reality scenario comprises a first electronic device and a plurality of second electronic devices, and the method comprises:
sending, by the plurality of second electronic devices, data transmission request messages to the first electronic device, wherein the data transmission request message indicates the second electronic device to transmit a buffered data frame to the first electronic device;
receiving, by a second electronic device corresponding to a first data frame, a transmission permission instruction sent by the first electronic device, wherein a manner of determining the first data frame is related to a transmission success probability of a data frame buffered by each second electronic device; and
sending, by the second electronic device corresponding to the first data frame, the first data frame to the first electronic device.

16. A data transmission apparatus, wherein the data transmission apparatus comprises:
a buffer module, configured to buffer a plurality of data frames, wherein each data frame is to be transmitted to one second electronic device;
a determining module, configured to determine, based on a transmission success probability of each data frame, a current to-be-transmitted first data frame, wherein the transmission success probability is used to evaluate a probability that the data frame is successfully transmitted; and
a transmission module, configured to transmit the first data frame to a second electronic device corresponding to the first data frame.

17. The data transmission apparatus according to claim 16, wherein the data frame is a data frame buffered by the buffer module at a current moment, the current moment is any time point in a delay period, a start point of the delay period is an initial moment, and the transmission success probability is determined based on remaining transmission time and complete transmission time;
the remaining transmission time is time required to completely transmit the data frame from the current moment, and the complete transmission time is time required to completely transmit the data frame from the initial moment; and
the transmission success probability is negatively correlated with both the remaining transmission time and the complete transmission time.

18. The data transmission apparatus according to claim 17, wherein the transmission success probability satisfies: $P 1 = g \left(ts\right) * h \left(tw\right) ,$ wherein *P*l is the transmission success probability; *t*s is the remaining transmission time; *g*(*ts*) is an emergency degree factor, wherein the emergency degree factor is negatively correlated with the remaining transmission time *t*s ; *t*w is the complete transmission time; and *h*(*tw*) is a success degree factor, wherein the success degree factor is negatively correlated with the complete transmission time *t*w.

19. The data transmission apparatus according to claim 18, wherein the emergency degree factor satisfies: $g \left(ts\right) = {e}^{\left(-ts+{k}_{a}\right)} ,$ wherein kₐ is a hyper-parameter, and is used to adjust a relationship between the emergency degree factor and the remaining transmission time.

20. The data transmission apparatus according to claim 18, wherein the success degree factor satisfies: $h \left(tw\right) = \frac{1}{{e}^{\left(c\left(tw-μ*D\right)\right)} + 1} ,$ wherein D represents the delay period; µ is a hyper-parameter, and is used to adjust a relationship between the complete transmission time and the delay period of the data frame; and c is a hyper-parameter, and is used to adjust a relationship between the complete transmission time and the success degree factor.

21. The data transmission apparatus according to claim 19, wherein the determining module is further configured to determine the remaining transmission time in the following manner:
the determining module is further configured to determine the remaining transmission time of the data frame based on a data frame length of the data frame and an average quantity, of the data frame, of bits transmitted on a historical channel, wherein the average quantity of bits transmitted on the historical channel is an average quantity of bits that are supported in transmission on a channel between the data transmission apparatus and a second electronic device corresponding to the data frame in a first historical period of time.

22. The data transmission apparatus according to claim 21, wherein the remaining transmission time *t*s satisfies: $t s = \frac{q}{\overline{r}} ,$ wherein q represents the data frame length; and *r̅* represents the average quantity of bits transmitted on the historical channel.

23. The data transmission apparatus according to claim 20, wherein the complete transmission time *t*w satisfies: $t w = w + \frac{q - r}{\overline{r}} ,$ wherein w represents waiting time for the data frame to be transmitted, wherein the waiting time for the data frame to be transmitted is time from the initial moment to the current moment; q represents the data frame length; *r̅* represents the average quantity of bits transmitted on the historical channel; and *r* represents a quantity, of the data frame, of bits transmitted on a current channel, wherein the quantity of bits transmitted on the current channel is a maximum quantity of bits that are supported in transmission on a channel between the data transmission apparatus and the second electronic device corresponding to the data frame at the current moment.

24. The data transmission apparatus according to claim 16, wherein that the determining module is configured to determine, based on the transmission success probability of each data frame, the current to-be-transmitted first data frame comprises:
the determining module is configured to calculate a priority score of each data frame based on the transmission success probability of each data frame; and
the determining module is configured to determine the first data frame based on the priority score.

25. The data transmission apparatus according to claim 24, wherein the priority score of each data frame satisfies: $Pr iority = β * f \left(\cdot \right) * P 1 ,$ wherein
Pr *iority* is the priority score, *β* is a hyper-parameter, and *f* (•) represents a channel preference factor, wherein the channel preference factor is related to a data frame length of the data frame, a quantity of bits transmitted on a current channel, an average quantity of bits transmitted on a historical channel; and
the quantity of bits transmitted on the current channel is a maximum quantity of bits that are supported in transmission on a channel between the data transmission apparatus and a second electronic device corresponding to the data frame at the current moment; and the average quantity of bits transmitted on the historical channel is an average quantity of bits that are supported in transmission on a channel between the data transmission apparatus and the second electronic device corresponding to the data frame in a first historical period of time.

26. The data transmission apparatus according to claim 25, wherein the channel preference factor satisfies: $f \left(\cdot \right) = \frac{min \left\{r, q\right\}}{\overline{r}} ,$ wherein *r* represents the quantity of bits transmitted on the current channel; *r̅* represents the average quantity of bits transmitted on the historical channel; and q represents the data frame length.

27. A data transmission apparatus, wherein the data transmission apparatus comprises a processor and a memory, and the processor is configured to execute data in the memory, so that the data transmission apparatus performs the method according to any one of claims 1 to 12.

28. A data transmission system, wherein the system comprises a first electronic device and a plurality of second electronic devices, the first electronic device is the data transmission apparatus according to any one of claims 16 to 27, and the second electronic device is configured to receive the first data frame sent by the first electronic device.

29. A data transmission apparatus, wherein the data transmission apparatus comprises:
a detection module, configured to detect data transmission request messages sent by a plurality of second electronic devices, wherein the data transmission request message indicates the second electronic device to transmit a buffered data frame to the data transmission apparatus;
a determining module, configured to determine, based on a transmission success probability corresponding to a data frame of each second electronic device, a current to-be-transmitted first data frame, wherein the transmission success probability is used to evaluate a probability that the data frame is successfully transmitted;
a sending module, configured to send a transmission permission instruction to a second electronic device corresponding to the first data frame; and
a receiving module, configured to receive the first data frame from the second electronic device corresponding to the first data frame.

30. A data transmission apparatus, wherein the data transmission apparatus comprises:
a first sending module, configured to send a data transmission request message to a first electronic device, wherein the data transmission request message indicates the data transmission apparatus to transmit a buffered data frame to the first electronic device;
a receiving module, configured to receive a transmission permission instruction sent by the first electronic device; and
a second sending module, configured to send a first data frame to the first electronic device, wherein a manner of determining the first data frame is related to a transmission success probability of the data frame buffered by the data transmission apparatus.

31. A data transmission apparatus, wherein the data transmission apparatus comprises a processor and a memory, and the processor is configured to execute data in the memory, so that the data transmission apparatus performs the method according to any one of claims 13 to 15.

32. A data transmission system, wherein the system comprises a first electronic device and a plurality of second electronic devices, the first electronic device is the data transmission apparatus according to claim 29, and the second electronic device is the data transmission apparatus according to claim 30.

33. A readable medium, wherein the readable medium stores instructions, and when the instructions are executed on an electronic device, the electronic device is enabled to perform the data transmission method according to any one of claims 1 to 15.

34. A chip, wherein the chip is applied to an electronic device, to perform the data transmission method according to any one of claims 1 to 15.

35. A computer program product, wherein the computer program product comprises computer program code, and when the computer program code is run on a computer, the computer is enabled to perform the data transmission method according to any one of claims 1 to 15.
